# EUROPEAN PATENT APPLICATION

(11) **EP 4 187 934 A1**
(43) Date of publication of application: **31.05.2023**
(21) Application number: 21857479.6
(22) Date of filing: 29.07.2021
(51) Int. Cl.: H04W 4/02

(54) **C-V2X LOW-POWER CONSUMPTION METHOD, ELECTRONIC DEVICE, AND CHIP SYSTEM**

(30) Priority: 17.08.2020 CN 202010834815
(71) Applicant: Huawei Technologies Co., Ltd., Shenzhen, Guangdong 518129 (CN)
(72) Inventor: YU, Xiaoyong, Shenzhen, Guangdong 518129 (CN); YANG, Haiquan, Shenzhen, Guangdong 518129 (CN); LIU, Yongxiang, Shenzhen, Guangdong 518129 (CN)
(74) Representative: Isarpatent
(86) International application number: PCT/CN2021/109299
(87) International publication number: WO 2022/037384

(57) **Abstract**

This application is applicable to the terminal field, and provides a low power consumption method for C-V2X, an electronic device, and a chip system. The method is applied to a first electronic device, and the first electronic device supports a C-V2X function. The method includes: when it is determined that the first electronic device is at a target location, activating the C-V2X function of the first electronic device. The first electronic device performs data exchange with a second electronic device based on the C-V2X protocol. When it is determined that the first electronic device completes data exchange with the second electronic device, the C-V2X function of the first electronic device is deactivated. The C-V2X function of the first electronic device is enabled only at the target location, and the C-V2X function is deactivated after data exchange is completed, so that an effective low power consumption mode is provided for the C-V2X function. In this way, the C-V2X function of the first electronic device is enabled only when data exchange needs to be performed. This effectively reduces power consumption of the first electronic device and extends a battery life.

## Description

This application claims priority to Chinese Patent Application No. 202010834815.5, filed with the China National Intellectual Property Administration on August 17, 2020 and entitled "LOW POWER CONSUMPTION METHOD FOR C-V2X, ELECTRONIC DEVICE, AND CHIP SYSTEM", which is incorporated herein by reference in its entirety.

### TECHNICAL FIELD

This application relates to the terminal field, and in particular, to a low power consumption method for C-V2X, an electronic device, and a chip system.

### BACKGROUND

To improve toll collection electronization of toll roads and improve toll collection efficiency and road traffic efficiency, all countries have gradually adopted electronic toll collection (Electronic Toll Collection, ETC) as a toll collection method for toll roads.

At present, the 3rd generation partnership project (3rd Generation Partnership Project, 3GPP) provides a cellular vehicle-to-everything (Cellular Vehicle-To-everything, C-V2X) technology for ETC. Compared with traditional ETC, C-V2X has advantages in both technology and service evolution. ETC implemented through C-V2X has been supported globally.

When a current C-V2X module is applied to ETC, the C-V2X module needs to be always in a working state, to send and receive C-V2X information. Because the C-V2X module is disposed in an on-board unit (On board Unit, OBU), that the C-V2X module is always in a working state increases power consumption of the OBU and affects a battery life of the OBU.

### SUMMARY

Embodiments of this application provide a low power consumption method for C-V2X, an electronic device, and a chip system. This can resolve a problem that power consumption of an OBU is increased because a C-V2X module is always in a working state, and a battery life of the OBU is affected.

According to a first aspect, an embodiment of this application provides a low power consumption apparatus for C-V2X, applied to a first electronic device. The first electronic device supports a C-V2X function. The method includes:

When it is determined that the first electronic device is at a target location, the C-V2X function of the first electronic device is activated. The first electronic device performs data exchange with a second electronic device based on the C-V2X protocol. When it is determined that the first electronic device completes data exchange with the second electronic device, the C-V2X function of the first electronic device is deactivated.

The first electronic device may be an OBU. The OBU is a terminal device having a C-V2X function, for example, an on-board equipment (On-Board Equipment, OBE), a smartphone, a tablet computer, a wearable device, or a customized terminal that has a C-V2X function. The second electronic device may be a road side unit (Road Side Unit, RSU), and when the OBU performs data exchange with the RSU, an ETC transaction may be completed. The C-V2X function may be implemented by using a C-V2X chip, and the C-V2X chip may be integrated into a baseband processor (Baseband Processor, BP) in the first electronic device. The activating the C-V2X function of the first electronic device means that the C-V2X chip in the BP starts to work, that is, the C-V2X chip starts to receive and send data. Similarly, deactivating the C-V2X function of the first electronic device means that the C-V2X chip in the BP stops working, that is, the C-V2X chip no longer receives and sends data.

In the first aspect, when it is determined that the first electronic device is at the target location, the C-V2X function of the first electronic device is activated. Then, the first electronic device performs data exchange with the second electronic device based on the C-V2X protocol. Finally, when it is determined that the first electronic device completes data exchange with the second electronic device, the C-V2X function of the first electronic device is deactivated. The C-V2X function of the first electronic device is enabled only at the target location, and the C-V2X function is deactivated after data exchange is completed, so that an effective low power consumption mode is provided for the C-V2X function. In this way, the C-V2X function of the first electronic device is enabled only when data exchange needs to be performed. This effectively reduces power consumption of the first electronic device and extends a battery life.

In some implementations, a first electronic device includes a control component.

That it is determined that the first electronic device is at a target location includes: If the control component receives a first control operation, it is determined that the first electronic device is at the target location, where the first control operation is used to indicate to activate the C-V2X function of the first electronic device.

The first control operation may be an operation of manually enabling the C-V2X function, for example, tapping a preset area on the first electronic device, or pressing a preset C-V2X function enabling button. The first control operation may be used to manually indicate that the first electronic device is at the target location, so that low power consumption control is performed more accurately.

In some implementations, the first electronic device includes a positioning component.

That it is determined that the first electronic device is at a target location includes: If the positioning component receives information about a geographical location within a preset geographical location range, it is determined that the first electronic device is at the target location.

The positioning component may be a BeiDou positioning module or a global positioning system (Global Positioning System, GPS) module. It is determined, based on the geographical location information of the first electronic device provided by the positioning component and the preset geographical location range, that the first electronic device is at the target location, and it may be automatically determined that the first electronic device is at the target location, to perform low power consumption control more flexibly.

In some implementations, the first electronic device includes a cellular communications component.

That it is determined that the first electronic device is at a target location includes: If base station feature information received by the cellular communications component includes feature information of a preset base station, it is determined that the first electronic device is at the target location.

The cellular communications component may be a global system of mobile communication (Global System of Mobile communication, GSM), a general packet radio service (General Packet Radio Service, GPRS), code division multiple access (Code Division Multiple Access, CDMA), wideband code division multiple access (Wideband Code Division Multiple Access, WCDMA), long term evolution (Long Term Evolution, LTE), time division multiplexing WCDMA (Time-Division WCDMA, TD-WCDMA), time division multiplexing LTE (Time-Division LTE, TD-LTE), fifth generation new radio (the 5th generation New Radio, 5G NR), or the like. If the base station feature information received by the cellular communications component includes the feature information of the preset base station, it is determined that the first electronic device is at the target location, and it may be automatically determined that the first electronic device is at the target location, thereby performing low power consumption control more flexibly.

In some implementations, that the first electronic device performs data exchange with the second electronic device based on the C-V2X protocol includes: receiving roadside information sent by the second electronic device; determining, based on the roadside information, that the second electronic device has permission to access the first electronic device; generating an authentication packet used to indicate the access permission and a transaction authentication code used to indicate transaction information, and sending the authentication packet and the transaction authentication code to the second electronic device; receiving a man-machine interaction interface request sent by the second electronic device based on the authentication packet and the transaction authentication code; responding to the man-machine interaction interface request, and sending a response result of the man-machine interaction interface request to the second electronic device; and receiving event report information sent by the second electronic device based on the response result of the man-machine interaction interface request, where the event report information is used to indicate that the first electronic device completes data exchange with the second electronic device.

The first electronic device performs data exchange with the second electronic device based on the C-V2X protocol, to complete an ETC transaction. That is, the first electronic device is disposed on a vehicle, and when the vehicle travels on a toll road, the ETC transaction may be performed by using a C-V2X function of the first electronic device, to complete payment.

In some implementations, it is determined that the first electronic device completes data exchange with the second electronic device includes: If event report information is received, it is determined that the first electronic device completes data interaction with the second electronic device.

In some implementations, the first electronic device includes a control component.

That it is determined that the first electronic device completes data exchange with the second electronic device includes: If the control component receives a second control operation, it is determined that the first electronic device completes data exchange with the second electronic device, where the second control operation is used to indicate to deactivate the C-V2X function of the first electronic device.

In some implementations, the first electronic device includes a positioning component.

That it is determined that the first electronic device completes data exchange with the second electronic device includes: If the positioning component receives geographical location information outside a preset geographical location range, it is determined that the first electronic device completes data exchange with the second electronic device.

In some implementations, the first electronic device includes a cellular communications component.

That it is determined that the first electronic device completes data exchange with the second electronic device includes: If base station feature information received by the cellular communications component does not include feature information of a preset base station, it is determined that the first electronic device completes data exchange with the second electronic device.

In some implementations, the first electronic device includes a display component configured to display a display interface.

After the activating the C-V2X function of the first electronic device, the method further includes: displaying, on the display interface, the prompt information indicating that the C-V2X function is activated.

In some implementations, when the first electronic device performs data exchange with the second electronic device based on the C-V2X protocol, the method further includes: displaying prompt information of the data exchange on the display interface.

In some implementations, after the deactivating the C-V2X function of the first electronic device, the method further includes:
displaying, on the display interface, prompt information indicating that the C-V2X function is deactivated.

In some implementations, the first electronic device includes a control component, a positioning component, a cellular communications component, and a display component that is configured to display a display interface.

That it is determined that the first electronic device is at a target location includes: If the control component receives the first control operation, it is determined that the first electronic device is at the target location, where the first control operation is used to indicate to activate the C-V2X function of the first electronic device; or if the positioning component receives geographical location information within a preset geographical location range, it is determined that the first electronic device is at the target location; or if the base station feature information received by the cellular communications component includes feature information of a preset base station, it is determined that the first electronic device is at the target location.

That the first electronic device performs data exchange with the second electronic device based on the C-V2X protocol includes: receiving the roadside information sent by the second electronic device; determining, based on the roadside information, that the second electronic device has permission to access the first electronic device; generating an authentication packet used to indicate the access permission and a transaction authentication code used to indicate transaction information, and sending the authentication packet and the transaction authentication code to the second electronic device; receiving a man-machine interaction interface request sent by the second electronic device based on the authentication packet and the transaction authentication code; responding to the man-machine interaction interface request, and sending a response result of the man-machine interaction interface request to the second electronic device; and receiving event report information sent by the second electronic device based on the response result of the man-machine interaction interface request, where the event report information is used to indicate that the first electronic device completes data exchange with the second electronic device.

That it is determined that the first electronic device completes data exchange with the second electronic device includes: if the event report information is received, it is determined that the first electronic device completes data exchange with the second electronic device; or if the control component receives a second control operation, it is determined that the first electronic device completes data exchange with the second electronic device, where the second control operation is used to indicate to deactivate a C-V2X function of the first electronic device; or if the positioning component receives geographical location information outside a preset geographical location range, it is determined that the first electronic device completes data exchange with the second electronic device; or if base station feature information received by the cellular communications component does not include feature information of a preset base station, it is determined that the first electronic device completes data exchange with the second electronic device.

After the activating the C-V2X function of the first electronic device, the method further includes: displaying, on the display interface, the prompt information indicating that the C-V2X function is activated.

When the first electronic device performs data exchange with the second electronic device based on the C-V2X protocol, the method further includes: displaying the prompt information of the data exchange on the display interface.

After the deactivating the C-V2X function of the first electronic device, the method further includes: displaying, on the display interface, the prompt information indicating that the C-V2X function is deactivated.

According to a second aspect, an embodiment of this application provides a low power consumption apparatus for C-V2X, applied to a first electronic device. The first electronic device supports a C-V2X function. The apparatus includes a determining module and an interaction module.

The determining module is configured to: when it is determined that a first electronic device is at a target location, activate a C-V2X function of the first electronic device. The interaction module is configured to perform data exchange between the first electronic device and a second electronic device based on the C-V2X protocol. The determining module is further configured to: when it is determined that the first electronic device completes data exchange with the second electronic device, deactivate the C-V2X function of the first electronic device.

In some implementations, the first electronic device includes a control component.

The determining module is specifically configured to: if the control component receives a first control operation, determine that the first electronic device is at the target location, where the first control operation is used to indicate to activate the C-V2X function of the first electronic device.

In some implementations, the first electronic device includes a positioning component.

The determining module is specifically configured to: if the positioning component receives information about a geographical location within a preset geographical location range, determine that the first electronic device is at the target location.

In some implementations, the first electronic device includes a cellular communications component.

The determining module is specifically configured to: if base station feature information received by the cellular communications component includes feature information of a preset base station, determine that the first electronic device is at the target location.

In some implementations, the interaction module is specifically configured to: receive roadside information sent by the second electronic device; determine, based on the roadside information, that the second electronic device has permission to access the first electronic device; generate an authentication packet used to indicate the access permission and a transaction authentication code used to indicate transaction information, and send the authentication packet and the transaction authentication code to the second electronic device; receive a man-machine interaction interface request sent by the second electronic device based on the authentication packet and the transaction authentication code; respond to the man-machine interaction interface request, and send a response result of the man-machine interaction interface request to the second electronic device; and receive event report information sent by the second electronic device based on the response result of the man-machine interaction interface request, where the event report information is used to indicate that the first electronic device completes data exchange with the second electronic device.

In some implementations, the determining module is specifically configured to: if the event report information is received, determine that the first electronic device completes data exchange with the second electronic device.

In some implementations, the first electronic device includes a control component.

The determining module is specifically configured to: if the control component receives a second control operation, determine that the first electronic device completes data exchange with the second electronic device, where the second control operation is used to indicate to deactivate the C-V2X function of the first electronic device.

In some implementations, the first electronic device includes a positioning component.

The determining module is specifically configured to: if the positioning component receives information about a geographical location outside a preset geographical location range, determine that the first electronic device completes data exchange with the second electronic device.

In some implementations, the first electronic device includes a cellular communications component.

The determining module is specifically configured to: if base station feature information received by the cellular communications component does not include feature information of a preset base station, determine that the first electronic device completes data exchange with the second electronic device.

In some implementations, the first electronic device includes a display component configured to display a display interface.

The apparatus further includes a display module, configured to display, on a display interface, prompt information indicating that a C-V2X function is activated.

In some implementations, the display module is further configured to display, on the display interface, prompt information of data exchange.

In some implementations, the display module is further configured to display, on the display interface, prompt information indicating that the C-V2X function is deactivated.

In some implementations, the first electronic device includes a control component, a positioning component, a cellular communications component, and a display component that is configured to display a display interface.

The determining module is specifically configured to: if the control component receives a first control operation, determine that the first electronic device is at a target location, where the first control operation is used to indicate to activate a C-V2X function of the first electronic device; or if the positioning component receives geographical location information within a preset geographical location range, determine that the first electronic device is at a target location; or if the base station feature information received by the cellular communications component includes feature information of a preset base station, determine that the first electronic device is at a target location.

The interaction module is specifically configured to: receive roadside information sent by the second electronic device; determine, based on the roadside information, that the second electronic device has permission to access the first electronic device; generate an authentication packet used to indicate the access permission and a transaction authentication code used to indicate transaction information, and send the authentication packet and the transaction authentication code to the second electronic device; receive a man-machine interaction interface request sent by the second electronic device based on the authentication packet and the transaction authentication code; respond to the man-machine interaction interface request, and send a response result of the man-machine interaction interface request to the second electronic device; and receive event report information sent by the second electronic device based on the response result of the man-machine interaction interface request, where the event report information is used to indicate that the first electronic device completes data exchange with the second electronic device.

The determining module is specifically configured to: if the event report information is received, determine that the first electronic device completes data exchange with the second electronic device; or if the control component receives a second control operation, determine that the first electronic device completes data exchange with the second electronic device, where the second control operation is used to indicate to deactivate a C-V2X function of the first electronic device; or if the positioning component receives geographical location information outside a preset geographical location range, determine that the first electronic device completes data exchange with the second electronic device; or if base station feature information received by the cellular communications component does not include feature information of a preset base station, determine that the first electronic device completes data exchange with the second electronic device.

The apparatus further includes a display module, configured to display, on a display interface, prompt information indicating that a C-V2X function is activated.

The display module is further configured to display, on the display interface, the prompt information of data exchange.

The display module is further configured to display, on the display interface, the prompt information indicating that the C-V2X function is deactivated.

According to a third aspect, an embodiment of this application provides an electronic device, including a memory, a processor, and a computer program that is stored in the memory and that can run on the processor, where the electronic device supports a C-V2X function, and when executing the computer program, the processor implements the following C-V2X low power consumption method:
when it is determined that the electronic device is at a target location, activating a C-V2X function of the first electronic device; performing, by the electronic device, data exchange with a second electronic device based on the C-V2X protocol; and when it is determined that the electronic device completes data exchange with the second electronic device, deactivating the C-V2X function of the electronic device.

In some implementations, the first electronic device includes a control component.

That it is determined that the first electronic device is at a target location includes: If the control component receives a first control operation, it is determined that the first electronic device is at the target location, where the first control operation is used to indicate to activate a C-V2X function of the first electronic device.

In some implementations, the first electronic device includes a positioning component.

That it is determined that the first electronic device is at a target location includes: If the positioning component receives information about a geographical location within a preset geographical location range, it is determined that the first electronic device is at the target location.

In some implementations, the first electronic device includes a cellular communications component.

That it is determined that the first electronic device is at a target location includes: If base station feature information received by the cellular communications component includes feature information of a preset base station, it is determined that the first electronic device is at the target location.

In some implementations, that the first electronic device performs data exchange with the second electronic device based on the C-V2X protocol includes: receiving roadside information sent by the second electronic device; determining, based on the roadside information, that the second electronic device has permission to access the first electronic device; generating an authentication packet used to indicate the access permission and a transaction authentication code used to indicate transaction information, and sending the authentication packet and the transaction authentication code to the second electronic device; receiving a man-machine interaction interface request sent by the second electronic device based on the authentication packet and the transaction authentication code; responding to the man-machine interaction interface request, and sending a response result of the man-machine interaction interface request to the second electronic device; and receiving event report information sent by the second electronic device based on the response result of the man-machine interaction interface request, where the event report information is used to indicate that the first electronic device completes data exchange with the second electronic device.

In some implementations, it is determined that the first electronic device completes data exchange with the second electronic device includes: If event report information is received, it is determined that the first electronic device completes data interaction with the second electronic device.

In some implementations, the first electronic device includes a control component.

That it is determined that the first electronic device completes data exchange with the second electronic device includes: If the control component receives a second control operation, it is determined that the first electronic device completes data exchange with the second electronic device, where the second control operation is used to indicate to deactivate the C-V2X function of the first electronic device.

In some implementations, the first electronic device includes a positioning component.

That it is determined that the first electronic device completes data exchange with the second electronic device includes: If the positioning component receives geographical location information outside a preset geographical location range, it is determined that the first electronic device completes data exchange with the second electronic device.

In some implementations, the first electronic device includes a cellular communications component.

That it is determined that the first electronic device completes data exchange with the second electronic device includes: If base station feature information received by the cellular communications component does not include feature information of a preset base station, it is determined that the first electronic device completes data exchange with the second electronic device.

In some implementations, the first electronic device includes a display component configured to display a display interface.

After the activating the C-V2X function of the first electronic device, the method further includes: displaying, on the display interface, the prompt information indicating that the C-V2X function is activated.

In some implementations, when the first electronic device performs data exchange with the second electronic device based on the C-V2X protocol, the method further includes: displaying prompt information of the data exchange on the display interface.

In some implementations, after the deactivating the C-V2X function of the first electronic device, the method further includes:
displaying, on the display interface, prompt information indicating that the C-V2X function is deactivated.

In some implementations, the first electronic device includes a control component, a positioning component, a cellular communications component, and a display component that is configured to display a display interface.

That it is determined that the first electronic device is at a target location includes: If the control component receives the first control operation, it is determined that the first electronic device is at the target location, where the first control operation is used to indicate to activate the C-V2X function of the first electronic device; or if the positioning component receives geographical location information within a preset geographical location range, it is determined that the first electronic device is at the target location; or if the base station feature information received by the cellular communications component includes feature information of a preset base station, it is determined that the first electronic device is at the target location.

That the first electronic device performs data exchange with the second electronic device based on the C-V2X protocol includes: receiving the roadside information sent by the second electronic device; determining, based on the roadside information, that the second electronic device has permission to access the first electronic device; generating an authentication packet used to indicate the access permission and a transaction authentication code used to indicate transaction information, and sending the authentication packet and the transaction authentication code to the second electronic device; receiving a man-machine interaction interface request sent by the second electronic device based on the authentication packet and the transaction authentication code; responding to the man-machine interaction interface request, and sending a response result of the man-machine interaction interface request to the second electronic device; and receiving event report information sent by the second electronic device based on the response result of the man-machine interaction interface request, where the event report information is used to indicate that the first electronic device completes data exchange with the second electronic device.

That it is determined that the first electronic device completes data exchange with the second electronic device includes: if the event report information is received, it is determined that the first electronic device completes data exchange with the second electronic device; or if the control component receives a second control operation, it is determined that the first electronic device completes data exchange with the second electronic device, where the second control operation is used to indicate to deactivate a C-V2X function of the first electronic device; or if the positioning component receives geographical location information outside a preset geographical location range, it is determined that the first electronic device completes data exchange with the second electronic device; or if base station feature information received by the cellular communications component does not include feature information of a preset base station, it is determined that the first electronic device completes data exchange with the second electronic device.

After the activating the C-V2X function of the first electronic device, the method further includes: displaying, on the display interface, the prompt information indicating that the C-V2X function is activated.

When the first electronic device performs data exchange with the second electronic device based on the C-V2X protocol, the method further includes: displaying the prompt information of the data exchange on the display interface.

After the deactivating the C-V2X function of the first electronic device, the method further includes: displaying, on the display interface, the prompt information indicating that the C-V2X function is deactivated.

According to a fourth aspect, an embodiment of this application provides a chip system. The chip system is applied to an electronic device. The chip system includes at least one processor, at least one interface circuit, and a C-V2X chip. The processor, the interface circuit, and the C-V2X chip are interconnected by using a line. When being activated, the C-V2X chip is configured to implement a C-V2X function of the electronic device. The processor receives a computer instruction from the electronic device and executes the following C-V2X low power consumption method: responding to an activation instruction sent when the electronic device is at a target location, and activating the C-V2X chip, to implement the C-V2X function of the electronic device; performing data exchange with a second electronic device based on the C-V2X protocol in response to a data exchange instruction sent by the electronic device; and deactivating the C-V2X chip in response to a deactivation instruction sent by the electronic device when the electronic device determines that the electronic device completes data exchange with the second electronic device.

In some implementations, the performing data exchange with a second electronic device based on the C-V2X protocol in response to a data exchange instruction sent by the electronic device includes: receiving roadside information sent by the second electronic device; determining, based on the roadside information, that the second electronic device has permission to access the electronic device; generating an authentication packet used to indicate the access permission and a transaction authentication code used to indicate transaction information, and sending the authentication packet and the transaction authentication code to the second electronic device; receiving a man-machine interaction interface request sent by the second electronic device based on the authentication packet and the transaction authentication code; responding to the man-machine interaction interface request, and sending a response result of the man-machine interaction interface request to the second electronic device; and receiving event report information sent by the second electronic device based on the response result of the man-machine interaction interface request, where the event report information is used to indicate that the electronic device completes data exchange with the second electronic device.

According to a fifth aspect, an embodiment of this application further provides a computer-readable storage medium. The computer-readable storage medium stores a computer program. When the computer program is executed by the processor, the method steps in the embodiments of the foregoing aspects may be implemented.

According to a sixth aspect, an embodiment of this application further provides a computer program product. When the computer program product runs on a terminal device, the terminal device implements the steps in the foregoing method embodiments when executing the computer program product.

It may be understood that, for beneficial effects of the second aspect to the sixth aspect, refer to related descriptions in the first aspect. Details are not described herein again.

### BRIEF DESCRIPTION OF DRAWINGS

FIG. 1 is a schematic diagram of an application scenario of a low power consumption method for C-V2X;
FIG. 2 is a schematic diagram of an application scenario of a low power consumption method for C-V2X according to an embodiment of this application;
FIG. 3 is a schematic diagram of a structure an OBU according to an embodiment of this application;
FIG. 4 is a schematic flowchart of a low power consumption method for C-V2X according to an embodiment of this application;
FIG. 5 is a schematic flowchart of a low power consumption method for C-V2X according to another embodiment of this application;
FIG. 6 is a schematic diagram of an application scenario of a low power consumption method for C-V2X according to another embodiment of this application;
FIG. 7 is a schematic diagram of a scenario of a low power consumption method that is for C-V2X and that is implemented by an OBU according to an embodiment of this application;
FIG. 8 is a schematic diagram of a scenario of a low power consumption method that is for C-V2X and that is implemented by an OBU according to another embodiment of this application;
FIG. 9 is a schematic diagram of a scenario of a low power consumption method that is for C-V2X and that is implemented by an OBU according to another embodiment of this application;
FIG. 10 is a schematic diagram of a scenario of a low power consumption method that is for C-V2X and that is implemented by an OBU according to another embodiment of this application;
FIG. 11 is a schematic diagram of a scenario of a low power consumption method that is for C-V2X and that is implemented by an OBU according to another embodiment of this application;
FIG. 12 is a schematic diagram of a scenario of a low power consumption method that is for C-V2X and that is implemented by an OBU according to another embodiment of this application;
FIG. 13 is a schematic diagram of a scenario of a low power consumption method that is for C-V2X and that is implemented by an OBU according to another embodiment of this application;
FIG. 14 is a schematic diagram of a scenario of a low power consumption method that is for C-V2X and that is implemented by an OBU according to another embodiment of this application;
FIG. 15 is a schematic diagram of a scenario of a low power consumption method that is for C-V2X and that is implemented by an OBU according to another embodiment of this application;
FIG. 16 is a schematic diagram of a scenario of a low power consumption method that is for C-V2X and that is implemented by an OBU according to another embodiment of this application;
FIG. 17 is a schematic diagram of a scenario of a low power consumption method that is for C-V2X and that is implemented by an OBU according to another embodiment of this application;
FIG. 18 is a schematic diagram of a scenario of a low power consumption method that is for C-V2X and that is implemented by an OBU according to another embodiment of this application;
FIG. 19 is a signaling diagram when a low power consumption method for C-V2X is applied to ETC according to an embodiment of this application;
FIG. 20A and FIG. 20B are a signaling diagram when a low power consumption method for C-V2X is applied to ETC according to an embodiment of this application;
FIG. 21 is a schematic flowchart of a low power consumption method for C-V2X according to another embodiment of this application;
FIG. 22 is a schematic diagram of a structure of a low power consumption apparatus for C-V2X according to an embodiment of this application;
FIG. 23 is a schematic diagram of a structure of a C-V2X low power consumption apparatus according to another embodiment of this application; and
FIG. 24 is a schematic diagram of a structure of an electronic device according to an embodiment of this application.

### DESCRIPTION OF EMBODIMENTS

In the following descriptions, for illustration instead of limitation, specific details such as a particular system structure and a technology are provided to make a thorough understanding of embodiments of this application. However, a person skilled in the art should know that this application may also be implemented in other embodiments without these specific details. In other cases, detailed descriptions of well-known systems, apparatuses, circuits, and methods are omitted, so that this application is described without being obscured by unnecessary details.

It should be understood that, when used in the specification and the appended claims of this application, the term "include" indicates presence of the described features, entireties, steps, operations, elements, and/or components, but does not exclude presence or addition of one or more other features, entireties, steps, operations, elements, components, and/or sets thereof.

It should also be understood that the term "and/or" used in the specification and the appended claims of this application refers to any combination and all possible combinations of one or more associated listed items, and includes these combinations.

As used in the specification and the appended claims of this application, according to the context, the term "if" may be interpreted as "when" or "once" or "in response to determining" or "in response to detecting". Similarly, the phrase "if it is determined" or "if it is identified" may be interpreted as meaning "once it is determined" or "in response to determining" or "once it is detected" or "in response to detecting" depending on the context.

In addition, in the descriptions of the specification and appended claims of this application, the terms "first", "second", "third", and the like are merely intended for distinction and description, but shall not be understood as an indication or an implication of relative importance.

Reference to "an implementation", "some implementations", or the like described in this specification means that one or more implementations of this application include a specific feature, structure, or characteristic described with reference to the implementations. Therefore, statements such as "in an implementation", "in some implementations", "in some other implementations", and "in other implementations", that appear at different places in this specification do not necessarily mean referring to a same implementation, instead, they mean "one or more but not all of the implementations", unless otherwise specifically emphasized.

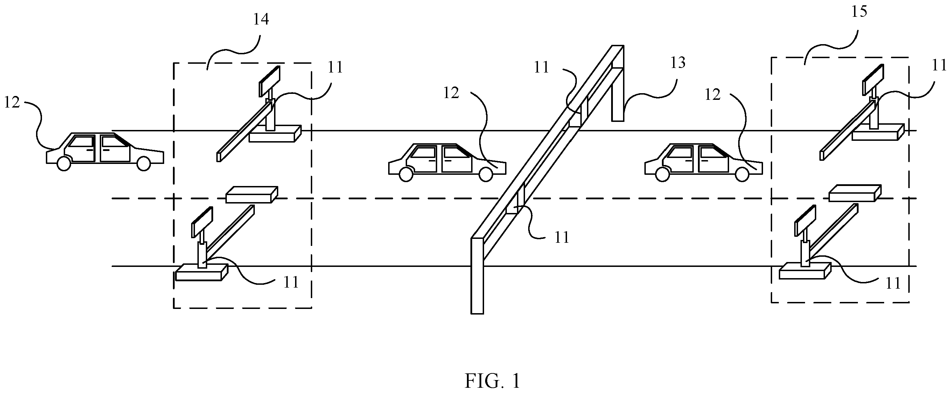

FIG. 1 is a schematic diagram of an application scenario of a method for activating a cellular vehicle-to-everything module.

In the scenario shown in FIG. 1, ETC implements billing and charging through C-V2X.

Referring to FIG. 1, RSUs 11 supporting C-V2X and a vehicle 12 having an OBU supporting C-V2X are included. When performing an ETC transaction, the RSU 11 and the OBU 12 exchange information (C-V2X information) based on the vehicle-to-everything (Vehicle-to-everything, V2X) protocol. The ETC transaction includes ETC billing and ETC charging. For example, when the vehicle passes an entrance 14 of a toll road or a detection point 13 disposed on the toll road, ETC billing is performed; and when the vehicle passes an exit 15 of the toll road, ETC charging is performed. The charging includes: calculating a toll of the vehicle 12 based on a distance between the toll road entrance 14 passed by the vehicle 12 and the detection point 13 passed by the vehicle 12 and a toll rate corresponding to the toll road. To charge a toll is to calculate a toll of the vehicle based on distances between the toll road entrance 14 passed by the vehicle 12, the detection point 13 passed by the vehicle 12, and the toll road exit 15, and toll rates corresponding to the toll road, and perform charging.

For example, it is assumed that after a vehicle travels into a highway, a distance between a toll station at an entrance of the highway and a first detection point is 15 kilometers, and a charging rate is 0.4 yuan/km. A distance between the first detection point and a second detection point is 20 km, and a charging rate is 0.5 yuan/km. A distance between the second detection point and a toll station at a highway exit is 10 km, and a charge rate is 0.6 yuan/km. Therefore, when billing is performed at the first detection point, a toll is 6 yuan. When billing is performed at the second detection point, a toll is a sum of tolls from the entrance of the highway to the second detection point, that is, 10 yuan+6 yuan=16 yuan. Finally, when charging is performed at the exit of the highway, a calculated and deducted toll is a sum of a toll between the entrance and the exit of the highway, that is, 10 yuan+6 yuan+6 yuan=22 yuan.

The RSUs 11 may be disposed at the entrance 14 of the toll road, the detection point 13, and the exit 15 of the toll road. The toll road may be a road on which a toll is charged, for example, a national road, a highway, or a cross-sea bridge. The detection point 13 is configured to bill the vehicle 12 passing the detection point 13. For example, when the vehicle 12 passes the detection point 13, the OBU in the vehicle 12 interacts with the RSU 11 disposed at the detection point 13, to bill the vehicle 12. As an example, the detection point 13 may be a gantry, a crossbar, or the like disposed on the toll road.

As an example, for a toll road with a relatively large quantity of lanes such as a highway with four lanes or five lanes, a gantry that crosses the entire road may be disposed, and one RSU 11 is disposed at a location that is on the gantry and that corresponds to each lane. Alternatively, for a toll road with a relatively small quantity of lanes such as a 2-lane highway or a toll bridge road, a pole may be disposed on a road side, a crossbar extending to the lanes is disposed on a top of the pole, and one RSU 11 is disposed at a location that is on the crossbar and that corresponds to each lane. When the vehicle 12 travels on one of the lanes and passes the detection point 13, the OBU in the vehicle 12 interacts with the RSU 11 corresponding to the lane, to complete billing.

When the vehicle passes the RSU, the OBU on the vehicle receives roadside information (Road Side Information, RSI) sent by the RSU. The RSI may include a toll road network number, a toll station number, a toll lane number, a time, a passing status, and the like that are corresponding to the RSU. Then, the OBU determines, based on the received RSI, that the RSU has permission to access the OBU. After determining that the RSU has the permission to access the OBU, the OBU generates an authentication packet and a transaction authentication code (Transaction Authentication Code, TAC). The OBU sends the authentication packet, vehicle information, and the TAC to the RSU. The RSU obtains an authentication result of the OBU based on the authentication packet. If the authentication result of the OBU is that the OBU passes, it is determined that the OBU has access permission of the RSU, and then the RSU reports the vehicle information and the TAC to a server.

In some scenarios, the RSU is disposed at an entrance of a highway, or is disposed on a gantry on a highway. After the RSU reports the vehicle information and the TAC to the server, the server performs billing based on the vehicle information and the TAC. However, in some other scenarios, an RSU is disposed at an exit of a highway. After the RSU reports the vehicle information and the TAC to the server, the server performs charging based on the vehicle information and the TAC.

It should be noted that the OBU of the vehicle interacts with the RSU each time when passing the entrance, the exit, or the detection point of the toll road. For example, based on the scenario shown in FIG. 1, a vehicle travels in from a toll road entrance and travels out from a toll road exit, and passes a detection point. In this case, an OBU of the vehicle interacts with RSUs disposed at the toll road entrance, the toll road exit, and the detection point, that is, interacts with the RSUs for three times in total. That is, when the vehicle travels to the toll road entrance, the OBU interacts with the RSU to implement an ETC function and start billing. When the vehicle travels to the detection point, the OBU also interacts with the RSU to perform billing. Finally, when the vehicle travels to the toll road exit, the OBU interacts with the RSU to complete charging.

When the OBU interacts with the RSU, to implement the ETC function, the OBU and the RSU send and receive C-V2X information by using respective C-V2X modules, and complete ETC transaction through a plurality of times of information interaction. A quantity of times of information interaction may be determined based on an interaction process preset in the RSU and the OBU. For example, a common information interaction process includes five interactions or seven interactions. Herein, five interactions are used as an example for description.

As an example, when detecting RSI broadcast by an RSU, an OBU may first establish a link to the RSU, and receive the RSI sent by the RSU. The OBU obtains, based on the RSI, first authentication information from an on board equipment-security access module (On Board Equipment-Security Access Module, OBE-SAM) integrated into the OBU.

Then, the OBU sends an acknowledgment character (Acknowledge character, ACK) including the first authentication information to the RSU. After receiving the ACK, the RSU obtains second authentication information and an access certificate from a payment security access module (Payment Security Access Module, PSAM) based on the first authentication information. The RSU sends the second authentication information and the access certificate to the OBU. The access certificate is used to authenticate permission of the RSU to access the OBU.

Then, the OBU obtains an authentication result and a TAC from the OBE-SAM based on the second authentication information and the access certificate, and if the authentication result is that the authentication succeeds, determine that the RSU has the permission to access the OBU, that is, the OBU is valid. Then, the OBU sends an authentication packet, vehicle information, and the TAC to the RSU.

The RSU determines, based on the received authentication result, that the OBU is valid, and then reports the received vehicle information and the TAC to a server. In addition, the RSU generates a man-machine interaction interface (Man Machine Interface, MMI) request and sends the man-machine interaction interface request to the OBU. The MMI request is used to instruct the OBU to notify a user of a transaction result.

Finally, the OBU notifies the user of the transaction result based on the received MMI request, and then returns a response result of the MMI request to the RSU to complete the transaction. After receiving event report information returned by the RSU based on the response result of the MMI request, the OBU disconnects the link with the RSU.

Currently, when ETC is performed through C-V2X, three transaction processes are included. That is, billing is performed at an entrance of a toll road, at a detection point on the toll road, and at an exit of the toll road. However, performing ETC transaction generally takes only a very short time in an entire driving process. For example, after a vehicle enters a toll road, if a detection point is set at an interval of 15 km, a vehicle speed is 100 km/h, and a communications process in which an OBU performs a transaction with an RSU of the detection point takes 1 second, a C-V2X module does not need to send and receive C-V2X information in 99.8% of a time in a driving process. However, currently, a C-V2X technology cannot support low power consumption measures such as hibernation and wakeup. Consequently, regardless of whether the vehicle is running, the C-V2X module in the OBU can only be always enabled, that is, V2X messages are continuously sent or V2X messages are continuously received, which greatly increases power consumption of the OBU. Especially for an OBU that uses a battery as an energy source, a battery life of the OBU is greatly shortened.

Therefore, this application provides a low power consumption method for C-V2X, and the method is based on the C-V2X technology. A C-V2X module may be activated when communication of the C-V2X module is required, and the C-V2X module is deactivated after a transaction is completed, so that power consumption of an OBU is reduced, and a battery life of the OBU is extended. The C-V2X may include long term evolution (Long Term Evolution, LTE) based V2X communication (LTE-Vehicle, LTE-V) and new radio (New Radio, NR) based V2X communication (New Radio-Vehicle, NR-V).

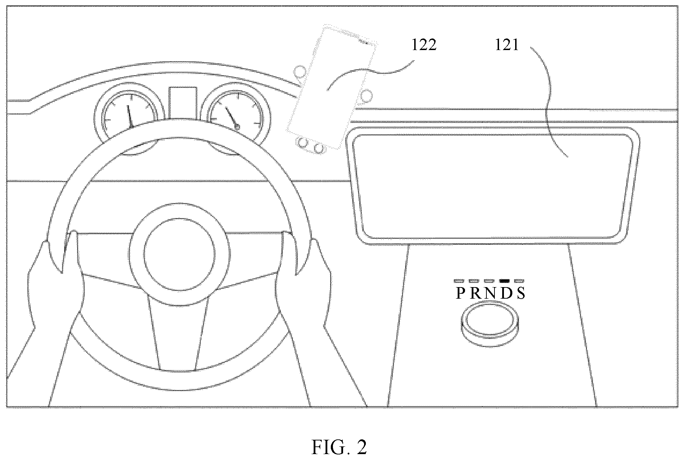

FIG. 2 shows a possible internal structure of a vehicle 12. The vehicle 12 includes at least one OBU. The OBU may be a terminal device having a C-V2X function, such as an on-board equipment (On-Board Equipment, OBE), a smartphone integrated with a C-V2X module, a tablet computer, a wearable device, or a customized terminal. The OBE may be an on-board equipment that applies the foregoing low power consumption method for C-V2X. For example, the OBE may be an on-board terminal integrated with a C-V2X module, a trip computer connected to a C-V2X module, or the like.

In this application, for example, the OBU may be an on-board terminal 121, a smartphone 122, an OBU customized terminal (not shown) with a C-V2X function, or the like.

For the on-board terminal 121 and the smartphone 122, a function of the OBU may be implemented by using some modules in the on-board terminal 121 and the smartphone 122. For example, for the smartphone 122, a function of the OBU may be implemented by an AP, a BP, and a positioning module of the smartphone.

However, for an OBU customized terminal with a C-V2X function, the OBU includes at least a BP having a C-V2X function, an electronic fence module, and the like, to implement an ETC function.

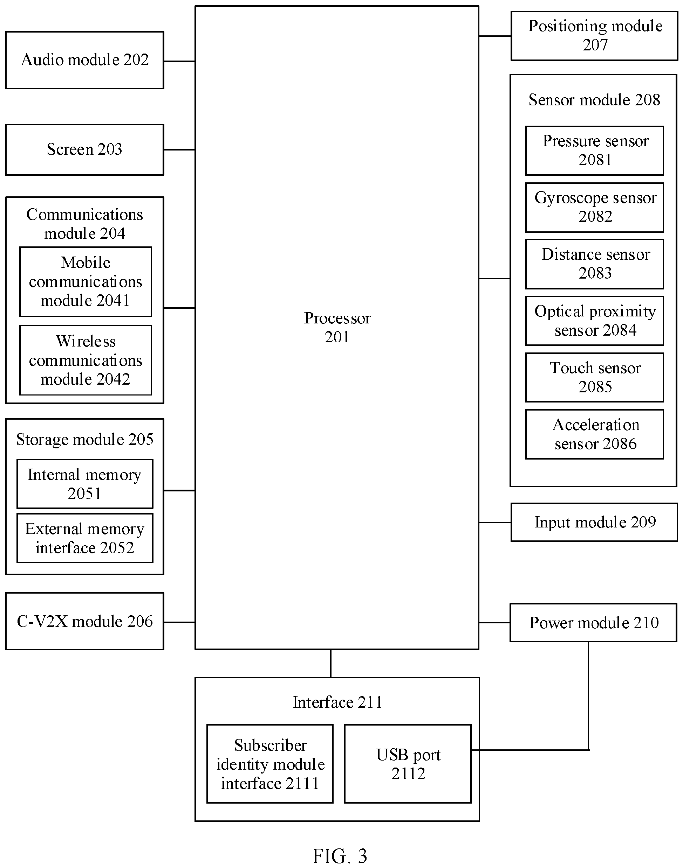

As an example only, FIG. 3 is a schematic diagram of a structure of an on-board OBU in FIG. 2. The OBU may apply the low power consumption method for C-V2X provided in this application.

As shown in FIG. 3, the OBU includes components such as a processor 201, an audio module 202, a screen 203, a communications module 204, a storage module 205, a C-V2X module 206, a positioning module 207, a sensor module 208, an input module 209, a power module 210, and an interface 211. A person skilled in the art may understand that the terminal device structure shown in FIG. 1 does not constitute a limitation on the terminal device, components more or fewer than those shown in FIG. 1 such as a camera module and a vibration module may be included, some components may be combined, or the components may be arranged in a different way.

The following specifically describes the components and modules of the OBU with reference to FIG. 3.

The processor 201 is a control center of the OBU, may be connected to various parts of the OBU through various interfaces and lines, runs or executes a software program and/or a module stored in the storage module 205, and invokes data stored in the storage module 205, to perform various functions of the OBU and process data. In the OBU, the processor 201 may be an application processor (Application processor, AP) configured to process an application program.

In some implementations, the processor 201 may include one or more processing units. For example, the processor may be a central processing unit (Central Processing Unit, CPU), or may be another general-purpose processor, a digital signal processor (Digital Signal Processor, DSP), an application-specific integrated circuit (Application-Specific Integrated Circuit, ASIC), a field-programmable gate array (Field-Programmable Gate Array, FPGA) or another programmable logic component, a discrete gate or a transistor logic device, a discrete hardware component, or the like.

It should be noted that, when the processor 201 is a system on chip (System on Chip, SoC), the processor 201 includes an AP, a BP, and a coprocessor (coprocessor, CP).

In still some implementations, the processor 201 may integrate an application processor and a modem processor. The application processor mainly processes an operating system, a user interface, an application program, and the like, and the modem processor mainly processes wireless communication. It may be understood that the modem processor may not be integrated into the processor 201. This is not limited in this application.

The audio module 202 is configured to play audio. For example, the audio module 202 plays a prompt voice, or plays a prompt tone.

The screen 203 is configured to display, through visual output, content output by the terminal device. For example, information input by a user may be displayed, information provided for the user may be displayed, and a system interface of the terminal device and an interface of an application program running on the terminal device may be displayed. A material of a display panel of the screen 203 may be a liquid crystal display (Liquid Crystal Display, LCD), a thin film transistor (Thin Film Transistor, TFT), a light-emitting semiconductor (Light-Emitting Diode, LED), an organic light emitting semiconductor (Organic Light-Emitting Diode, OLED), or the like. This is not limited herein.

In some implementations, the touch panel may cover the display panel of the screen. After detecting a touch operation on or near the touch panel, the touch panel transfers the touch operation to the processor 201, to determine a type of a touch event. Subsequently, the processor 201 provides a corresponding visual output on the display panel based on the type of the touch event. Although the screen and the touch panel (not shown) in FIG. 3 are two components that are independent of each other to implement input and input functions of a mobile phone, in some implementations, the touch panel and the display panel may be integrated to implement the input and output functions of the mobile phone. After being integrated with the screen, the touch panel may be used as a touchscreen. The touchscreen may receive a touch signal on the touch panel and feed back the touch signal to the processor 201. The processor 201 responds based on the touch signal, and displays a result obtained after the response on the display panel of the screen.

The communications module 204 may include a mobile communications module 2041 and a wireless communications module 2042. The mobile communications module 2041 may be integrated into a BP, and the BP may support any communications standard or protocol, including but not limited to a global system for mobile communications (Global System of Mobile communication, GSM), a general packet radio service (General Packet Radio Service, GPRS), code division multiple access (Code Division Multiple Access, CDMA), wideband code division multiple access (Wideband Code Division Multiple Access, WCDMA), long term evolution (Long Term Evolution, LTE), time-division multiplexing WCDMA (Time-Division WCDMA, TD-WCDMA), time-division multiplexing LTE (Time-Division LTE, TD-LTE), the fifth generation new radio (the 5th generation New Radio, 5G NR), and the like. The wireless communications module 2042 may support Bluetooth (Bluetooth), Wireless Fidelity (Wireless Fidelity, Wi-Fi), Near Field Communication (Near Field Communication, NFC), and the like.

The mobile communications module 2041 may be configured to connect to a communications base station through an antenna, to establish a call link between the terminal device and another terminal device, and receive call audio. The wireless communications module 2042 is configured to be wirelessly connected to an external call apparatus, where the external call apparatus may be an external apparatus having functions of playing and receiving voices, such as a Bluetooth headset or a Bluetooth speaker. When the external call apparatus is connected to the terminal device by using the wireless communications module 2042, the external call apparatus may play audio by using the external call apparatus, receive an analog audio signal collected by the external call apparatus, process the analog audio signal, and send the analog audio signal to the processor 201.

The storage module 205 includes an internal memory 2051 and an external memory interface 2052. The internal memory 2051 may be a flash memory, a hard disk, an operational memory, or the like. For example, the internal memory may include at least one hard disk or flash memory, and one operational memory. The external memory interface 2052 is configured to connect to an external memory. The external memory may include a memory card, a removable hard disk, a USB flash drive, an optical disc, and the like.

The storage module 205 may be configured to store a software program and a module. The processor 201 performs various function applications of the terminal device and data processing by running the software program and the module that are stored in the storage module 205. The storage module 205 may mainly include a program storage area and a data storage area. The program storage area is usually located on the internal memory 2051, and may store an operating system and an application program (such as a sound playing function and a touch response function) required by at least one function. The data storage area may be located on the internal memory 2051, or on the external memory connected to the external memory interface 2052, or on both the internal memory and the external memory. The data storage area may store data (such as audio data, image data, and video data) created based on use of the mobile phone.

The C-V2X module 206 may be an independent module, or may be integrated into the mobile communications module 2041. The C-V2X module may communicate with another device having a C-V2X module based on the V2X protocol. For example, an RSU having a C-V2X module communicates with an OBU having a C-V2X module. Alternatively, an OBU having a C-V2X module may communicate with user equipment having a C-V2X module through a cellular mobile network. For example, the OBU having the C-V2X module sends traveling information of the vehicle to the user equipment. Alternatively, an OBU having a C-V2X module may be connected to the Internet, and obtains required data through the Internet. For example, the OBU having the C-V2X module downloads road congestion information from a server.

It should be noted that, in some implementations, the C-V2X module may be independently used as an OBU. Alternatively, the C-V2X module may further form an OBU together with another module. This is not limited herein.

The positioning module 207 may include a GPS module and a BeiDou module. The positioning module 207 may obtain current geographical location information of the OBU from a GPS or a BeiDou system, for example, longitude and latitude of the OBU.

The terminal device may further include the sensor module 208. The sensor module includes at least one sensor, for example, a pressure sensor 2081, a gyroscope sensor 2082, a distance sensor 2083, an optical proximity sensor 2084, a touch sensor 2085, or an acceleration sensor 2086. Specifically, the optical proximity sensor 2084 may include an ambient light sensor and a proximity sensor. The ambient light sensor may adjust luminance of the display panel based on brightness of ambient light. The proximity sensor may power off the display panel and/or backlight of the screen 203 when the mobile phone moves to an ear. As one type of motion sensor, the acceleration sensor 2086 may detect magnitudes of accelerations in various directions (generally three axes), and may detect magnitudes and directions of gravity when the device is still, may be configured to identify a posture of the terminal device (for example, picking up or dropping the terminal device, or placing the terminal device horizontally or vertically), and may be further configured to identify a related action (for example, step counting or tapping) by vibration. Other sensors of the terminal device are not described herein.

The input module 209 may be configured to receive input information and a button signal, where the input information includes digital or character information, touch information, and the like, and the button signal includes a pressing signal of a physical button, a pressing signal of a virtual button, and the like.

In an implementation, the input module 209 may include a touch panel and another input device. The touch panel and the screen 203 may form a touchscreen, and the touch panel may collect a touch operation performed by a user on or near the touch panel, (for example, an operation performed by the user on or near the touch panel by using an object or accessory that can generate a touch signal on the touch panel, such as a finger or a stylus) and is driven to execute the corresponding function based on a preset program. Optionally, the touch panel may include two parts: a touch detection apparatus and a touch controller. The touch detection apparatus detects a touch position of a user, detects a signal generated by a touch operation, and transmits the signal to the touch controller. The touch controller receives touch information from the touch detection apparatus, converts the touch information into touch point coordinates, and then sends the touch point coordinates to the processor 201. The processor 201 receives the sent touch point coordinates, converts the touch information into a touch control instruction, and executes the touch control instruction. The touch panel may be implemented in a plurality of types, such as a resistive type, a capacitive type, an infrared type, and a surface acoustic wave type. The another input device may include but is not limited to one or more of a physical keyboard, a function button (such as a volume control button or a power button), a trackball, a mouse, a joystick, and the like.

The terminal device further includes the power module 210 that supplies power to each component. The power module may include a battery, a power management module, and the like. The power management module may be logically connected to the processor 210, so that functions such as battery charging and discharging management and power consumption management are implemented by using the power management module.

In an implementation, the power module 210 may further include a photovoltaic module, configured to convert solar radiation energy into electric energy, to supply power to another module.

The interface 211 includes but is not limited to a subscriber identity module (Subscriber Identity Module, SIM) card interface 2111, and a USB interface 2112. The SIM card interface is configured to insert a SIM card provided by an operator, so that when communicating with a base station by using a mobile communications module 2041, the terminal device identifies and verifies an identity of a user, and after the verification succeeds, sends a call request and a data request to the base station, and receives a call, data, a short message, and the like, forwarded by the base station.

The USB interface 2112 may connect the terminal device to a computer by using a USB data cable, to exchange data. In addition, the USB interface 2112 is further connected to the power module 210. When a USB data cable is connected to a computer or a charging jack, input electric energy may be transmitted to the power module 210 to charge the terminal device. The USB interface 2112 may be a micro-USB interface, a mini-USB interface, a USB Type-c interface, or the like. This is not limited herein.

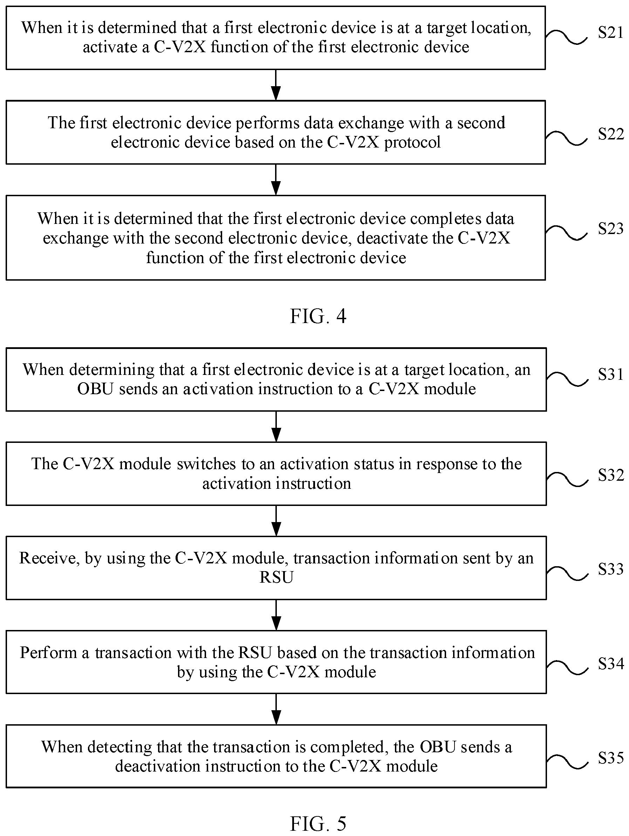

FIG. 4 is a schematic flowchart of a low power consumption method for C-V2X according to this application. The method may be applied to the OBU disposed in the vehicle shown in FIG. 1, FIG. 2, and FIG. 3. In this application, an example in which a car is used as a vehicle is used. However, the vehicle may be a vehicle that needs to perform ETC, such as a motorcycle, a stroller, or an agricultural vehicle.

S21: When it is determined that a first electronic device is at a target location, activate a C-V2X function of the first electronic device.

S22: The first electronic device performs data exchange with a second electronic device based on the C-V2X protocol.

S23: When it is determined that the first electronic device completes data exchange with the second electronic device, deactivate the C-V2X function of the first electronic device.

The first electronic device may be an OBU. The OBU is a terminal device having a C-V2X function, for example, an OBE, a smartphone, a tablet computer, a wearable device, or a customized terminal that has a C-V2X function. The second electronic device may be an RSU, and when the OBU performs data exchange with the RSU, an ETC transaction may be completed. The C-V2X function may be implemented by using a C-V2X chip, and the C-V2X chip may be integrated into a BP in the first electronic device. Activating the C-V2X function of the first electronic device means that the C-V2X chip in the BP starts to work, that is, the C-V2X chip starts to receive and send data. Similarly, deactivating the C-V2X function of the first electronic device means that the C-V2X chip in the BP stops working, that is, the C-V2X chip no longer receives and sends data.

In some implementations, the first electronic device performs data exchange with the second electronic device based on the C-V2X protocol, so that an ETC transaction on a toll road can be implemented. The target location is an area where an ETC transaction needs to be performed, for example, an entrance and an exit of a highway or a detection point for billing on a highway.

As an example, a C-V2X function may be activated by sending a corresponding activation instruction to an enabling end of a C-V2X module, so that the C-V2X module starts to work. However, for disabling a function of sending and receiving C-V2X information, a corresponding deactivation instruction may be sent to the enabling end of the C-V2X module, so that the C-V2X module stops working.

In another example, the disabling the function of sending and receiving C-V2X information may be alternatively implemented by disconnecting power supply to the C-V2X module. Correspondingly, enabling the function of receiving and sending C-V2X information may be implemented by supplying power to the C-V2X module. A manner of enabling the function of sending and receiving C-V2X information and a manner of disabling the function of sending and receiving C-V2X information are not limited herein.

In this embodiment, the OBU performs C-V2X information exchange with the RSU, to perform an ETC transaction. When the ETC transaction ends, the OBU stops sending and receiving C-V2X information. In this way, when no ETC transaction needs to be performed, the function of sending and receiving C-V2X information may be disabled, thereby reducing power consumption of the OBU and extending a battery life of the OBU.

FIG. 5 shows a possible low power consumption method for C-V2X in this application. As shown in FIG. 5, the method includes the following steps.

S31: When it is determined that an OBU is at a target location, send an activation instruction to a C-V2X module.

S32: The C-V2X module switches to an activation status in response to the activation instruction.

In some implementations, there may be two cases of determining that the OBU is at the target location. One is manual determining, and the other is automatic determining.

During manual determining, it indicates that a user controls the OBU, actively activates the C-V2X module, and enables a C-V2X function. Activating the C-V2X module means that the C-V2X module starts to work, and enabling the C-V2X function means that the C-V2X module starts to send and receive C-V2X information.

In some implementations, during manual determining, if the OBU receives an activation instruction sent by the user, it is determined that the OBU is at the target location. As an example, the activation instruction may be an operation of pressing a button used to activate the C-V2X module. For example, refer to FIG. 5. The button used to activate the C-V2X module may be an activation button 41 disposed on a steering wheel of a vehicle, an activation lever 42 disposed on a central control system, or the like. When the user presses the activation button 41 or flips the activation lever 42, and the OBU receives a corresponding button pressing operation, it is determined that the OBU meets a preset activation condition.

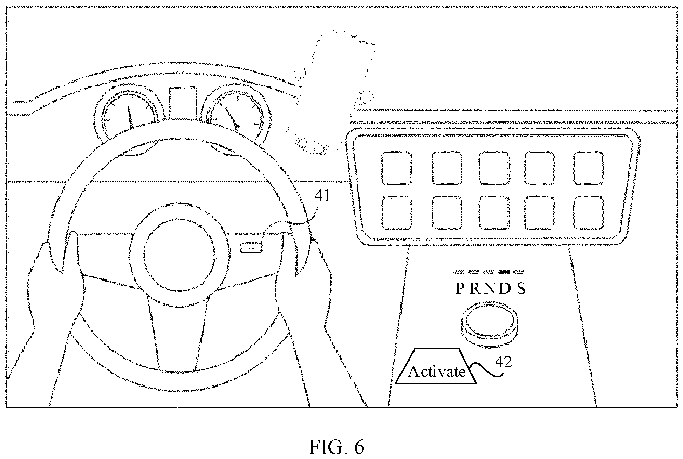

In some other implementations, during manual determining, it may alternatively be detected that the user starts an application program preset in the OBU. For example, refer to FIG. 2 and FIG. 6. An application program used for performing ETC is installed on an on-board terminal or user equipment. After a user taps an icon corresponding to the application program on the on-board terminal or the user equipment, the on-board terminal or the user equipment receives and responds to a tap operation to start the application program. When the OBU detects that the application program is started, it is determined that the OBU is at the target location. Alternatively, when the application is started but is running in the background, when an operation of switching the application program to the foreground is received, it may be determined that the OBU is at the target location.

In some implementations, the C-V2X module is integrated into a BP, and activation and deactivation of the C-V2X module may be implemented by using an AT (Attention) instruction. For example, after it is determined that an OBU is at a target location, an AP may send, to a BP, an AT instruction for activating a C-V2X module, for example, "AT^VMODE=1". After receiving the AT instruction, the BP activates the C-V2X module based on the AT instruction. After being activated, the C-V2X module starts to receive and send C-V2X information.

Herein, a scenario in which manual determining is applied is described.

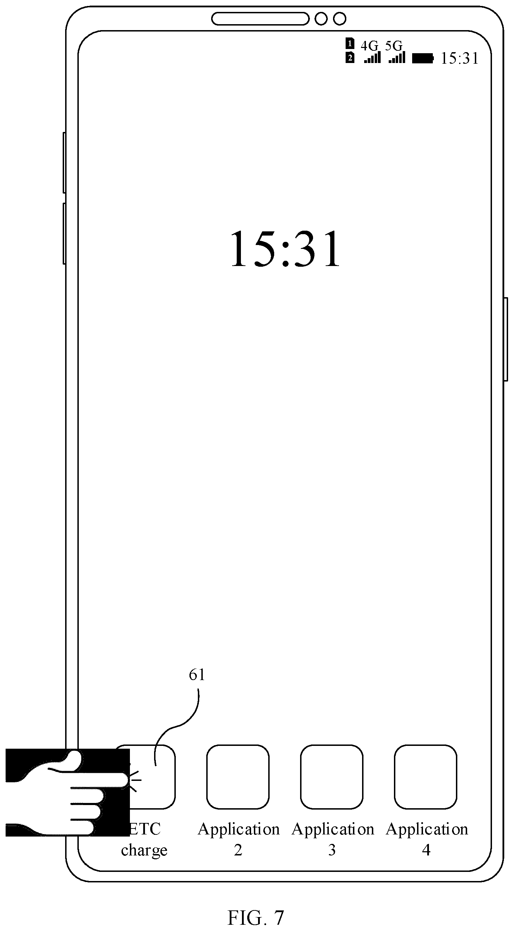

In some implementations, the OBU may be user equipment, for example, a smartphone or a tablet computer having C-V2X. Refer to FIG. 7. That an OBU is a smartphone is used for description.

In an interface shown in FIG. 7, an icon 61 of an application program used for ETC charging is displayed. When a smartphone receives a tap operation performed on the icon 61, an activity manager service (Activity Manager Service, AMS) of the smartphone detects that the tap operation is used to indicate to start an application program named "ETC charge", and starts the "ETC charge" application by using an AP. In addition, if the AP detects that the application program used for ETC charging is started, the AP determines that the OBU is at a target location, and sends an AT instruction for activating a C-V2X module to a BP. After receiving the AT instruction, the BP activates the C-V2X module based on the AT instruction.

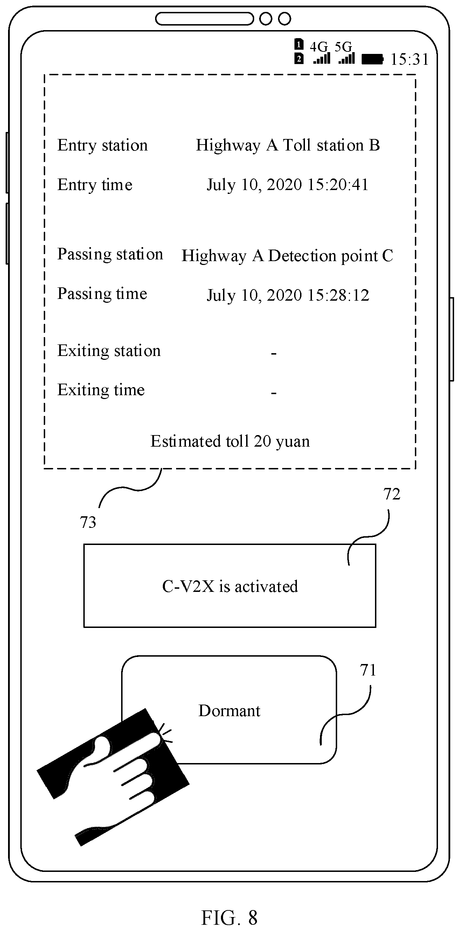

After the application program is started, an interface shown in FIG. 8 may be displayed. The interface includes an activation/deactivation button 71 and activation prompt information 72.

When C-V2X is activated, the activation prompt information 72 is displayed as "C-V2X is activated", and the activation/deactivation button 71 is displayed as "Dormant". If a tap operation performed on the activation/deactivation button 71 is received, the AP may send, to the BP, an AT instruction for deactivating the C-V2X module, so that the C-V2X module is no longer enabled, and enters a dormant state. Then, an interface shown in FIG. 8 may be displayed. The activation/deactivation button 71 is displayed as "Activated", and the activation prompt information 72 is displayed as "C-V2X is dormant". If a tap operation performed on the activation/deactivation button 71 is received again, it is determined again that the OBU is at the target location, and the AP may send, to the BP again, an AT instruction for activating the C-V2X module, so that the C-V2X module is activated to work, and the interface in FIG. 8 is displayed.

Optionally, after the C-V2X module is activated and performs an ETC transaction, if the AP detects that the C-V2X module sends a transaction completion instruction to an RSU, the AP may send, to the BP, an AT instruction for deactivating the C-V2X module, so that the C-V2X module enters a dormant state timely, thereby reducing power consumption and extending a battery life.

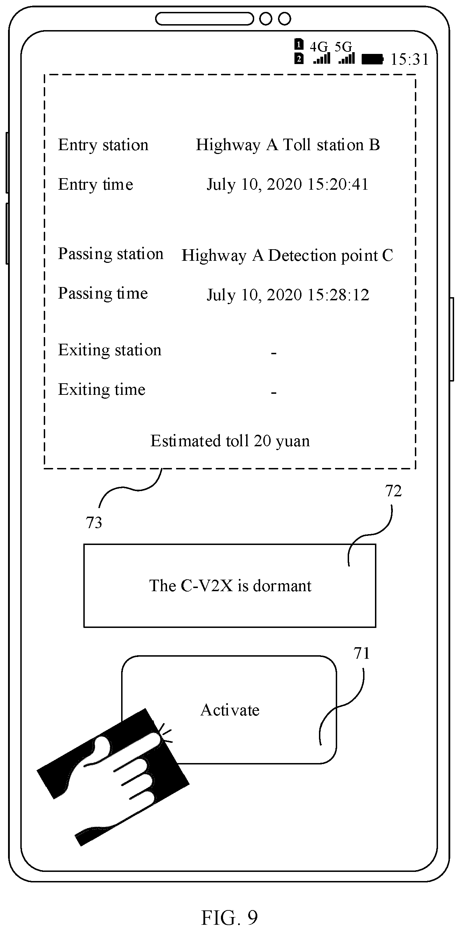

It should be further noted that the interfaces shown in FIG. 8 and FIG. 9 may further include billing information 73, used to display stations at which a vehicle has performed ETC transactions on a toll road, and an estimated toll calculated based on a distance between the stations, to prompt a user of details of the ETC transactions.

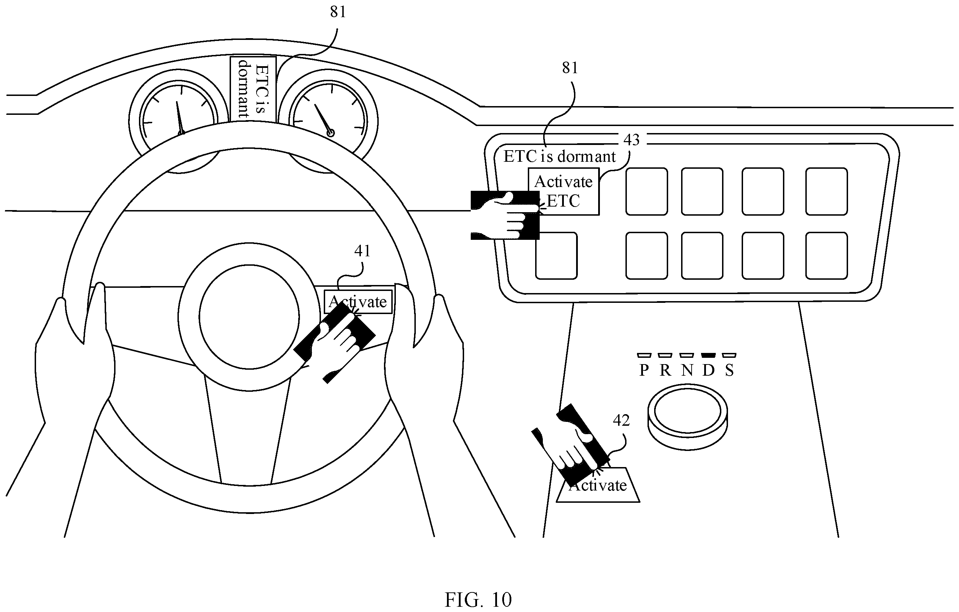

In some other implementations, the OBU may be an on-board terminal, for example, may be a trip computer that supports C-V2X and a central control screen connected to the trip computer. Refer to FIG. 10. FIG. 10 shows an activation button 41 connected to a trip computer, an activation lever 42, and an activation icon 43 displayed on a central control screen. It should be noted that, during actual application, at least one of the activation button 41, the activation lever 42, and the activation icon 43 may be included, to provide a manual determining operation.

By default, a C-V2X module is dormant during driving. When the C-V2X module is dormant, prompt information 81 "ETC is dormant" may be displayed on the central control screen and an information screen of an on-board computer.

As an example, when detecting one of a pressing operation performed on the activation button 41, a flip operation performed on the activation lever 42, or a tap operation performed on the activation icon 43, an AP of the trip computer determines that the OBU is at a target location. The AP sends, to a BP, an AT instruction for activating the C-V2X module. After receiving the AT instruction, the BP activates the C-V2X module based on the AT instruction.

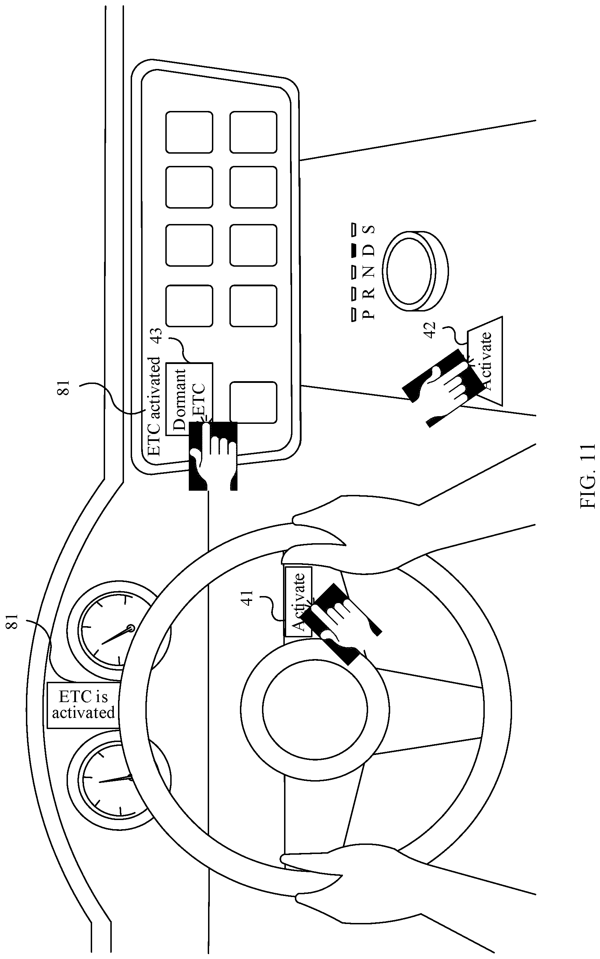

After the C-V2X module is activated, refer to FIG. 11. The prompt information 81 displayed on the central control screen and the information screen of the on-board computer may be updated to "ETC is activated", to prompt the user of an enabling status of a C-V2X function.

When the C-V2X module is activated, if the AP detects again one of a pressing operation performed on the activation button 41, a flip operation performed on the activation lever 42, or a tap operation performed on the activation icon 43, the AP sends, to the BP, an AT instruction for deactivating the C-V2X module. After receiving the AT instruction, the BP deactivates the C-V2X module based on the AT instruction.

By manually determining that the OBU is at the target location and then activating the C-V2X module, the C-V2X module may be activated in an area in which C-V2X communication needs to be performed, a C-V2X function is enabled, and the C-V2X module is disabled after a transaction is completed. Because manual determining is performed, this can be more flexibly applied to all application scenarios.

Automatic determining indicates that the OBU determines that the vehicle is close to an area in which an ETC transaction needs to be performed. The C-V2X module is activated, and a C-V2X function is enabled, to complete an ETC transaction.

In some implementations, the automatically determining that the OBU is at the target location may be determining that the vehicle has entered a preset electronic fence range. As an example, a plurality of pieces of preset electronic fence information may be stored in a memory of the OBU. The electronic fence information may include electronic fence coordinates and a coverage radius of an electronic fence. Alternatively, the electronic fence information may further include a preset base station number.

When the electronic fence information is the electronic fence coordinates and the coverage radius of the electronic fence, the OBU may obtain location information of the BOE from a positioning module, and determine, based on whether a location of the OBU is within a coverage range of the electronic fence, whether a vehicle enters the electronic fence. If the vehicle enters the electronic fence, it is determined that the vehicle is close to the area in which the ETC transaction needs to be performed.

If the electronic fence information is the preset base station number, numbers of all base stations that can be identified at a current location of the vehicle may be obtained by using a mobile communications module in the OBU. If the obtained base station numbers include the preset base station number, it may be determined that the OBU enters the electronic fence. In this way, it is determined that the vehicle is close to the area in which the ETC transaction needs to be performed.

In some other implementations, an image in front of the vehicle may alternatively be obtained, and the image is recognized. If an image of a toll station or a checkpoint can be recognized, it is determined that the vehicle is close to the area in which the ETC transaction needs to be performed.

After an automatic activation condition is met, an AP, the positioning module, or the mobile communications module may send, to a BP, an AT instruction for activating the C-V2X module. After receiving the AT instruction, the BP activates the C-V2X module based on the AT instruction. After being activated, the C-V2X module starts to receive and send C-V2X information.

Herein, a scenario in which automatic activation is applied is described.

In an implementation, in addition to the C-V2X module, the OBU further needs to include an electronic fence module. The electronic fence module is a set of modules that can implement an electronic fence function in the OBU. The electronic fence function is used to identify whether the OBU is at the target location.

As an example, the electronic fence module may include an AP and a positioning module. For example, the AP obtains geographical location information of the OBU by using the positioning module, and then compares the geographical location information with a pre-stored geographical location range of the electronic fence. If the geographical location of the OBU is within the geographical location range of the electronic fence, the AP determines that the OBU is at the target location.

Alternatively, the electronic fence module may further include an AP and a mobile communications module. For example, the AP identifies, by using the mobile communications module, whether a base station corresponding to a cell that covers a location of the OBU is a target base station, and if the base station corresponding to the cell that covers the location of the OBU is the target base station, determines that the OBU is at the target location. As an example, the mobile communications module may obtain identity documents (Identity document, ID) of cells broadcast by all base stations within a signal range. If the obtained cell IDs include a pre-stored ID of a cell corresponding to a target base station, it may be determined that the OBU is at the target location. In another example, the mobile communications module may receive a system information block (System Information Block, SIB) message broadcast by a base station in a signal range, and the SIB message includes a feature of a base station that sends the SIB message. If the base station feature corresponding to the received SIB message includes a pre-stored feature of a target base station, it may be determined that the OBU is at the target location.

Alternatively, the electronic fence module may further include an AP and a Wi-Fi module, a Bluetooth module, a near field communication (Near Field Communication, NFC) module, and the like. For example, when identifying a preset Wi-Fi wireless access point by using the Wi-Fi module, the AP may determine that the OBU is at the target location. Similarly, the AP may further identify a preset Bluetooth wireless access point by using the Bluetooth module, communicate with a preset NFC access point by using the NFC module, and the like, to determine that the OBU is at the target location.

In the following embodiment, automatic determining is described by using an example in which the electronic fence module includes an AP and a mobile communications module.

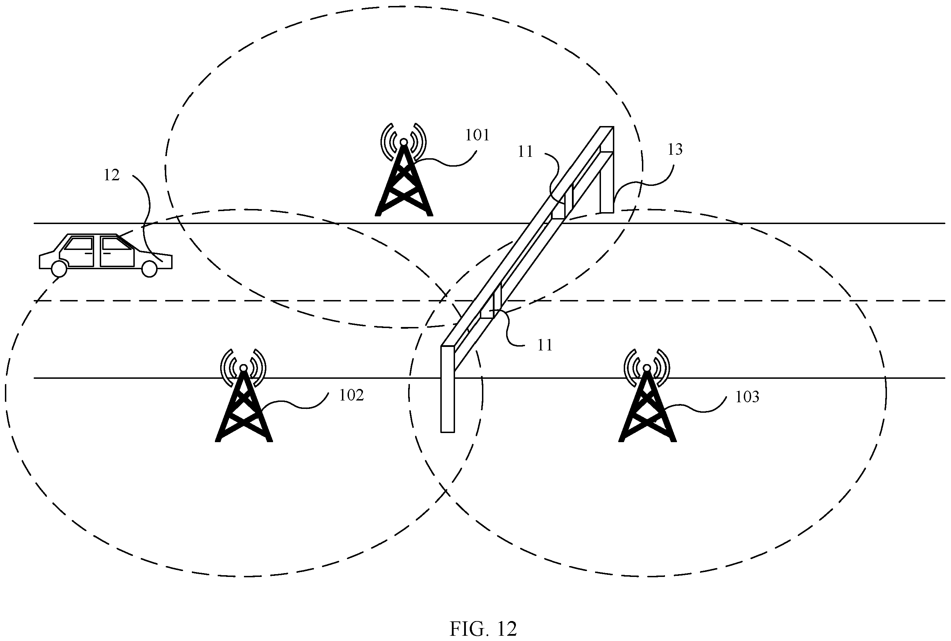

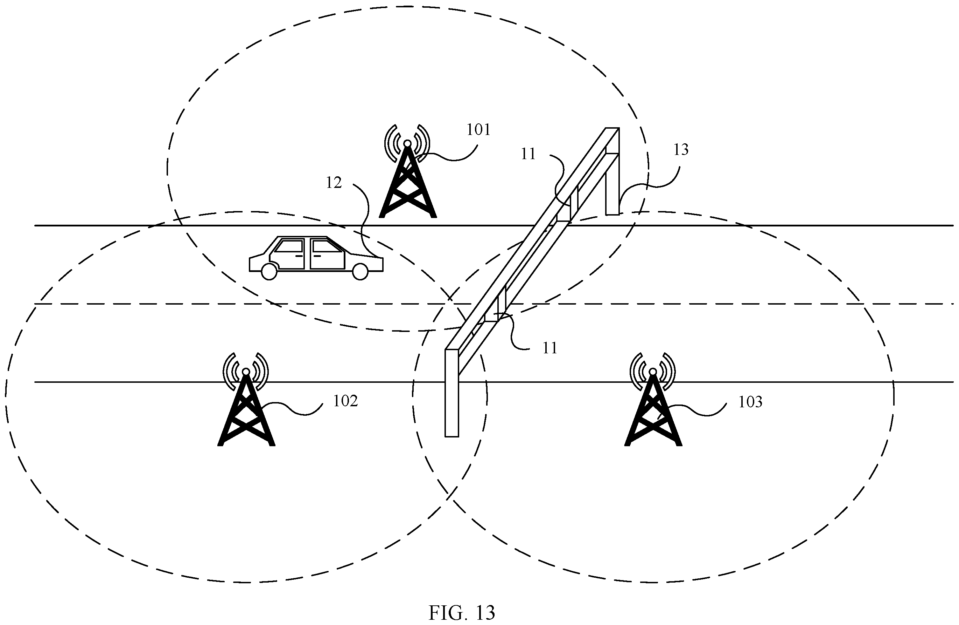

In a possible implementation, the electronic fence module includes an AP and a mobile communications module. Refer to FIG. 12 and FIG. 13. When a vehicle 12 is traveling, an OBU in the vehicle 12 may travel into cell coverage of a first base station 101, a second base station 102, and a third base station 103. Cells broadcast by different base stations may be distinguished by using cell IDs. For example, it is assumed that an ID of a cell broadcast by the first base station is 00001, an ID of a cell broadcast by the second base station is 00002, and an ID of a cell broadcast by the third base station is 00003.

The electronic fence module may obtain cell IDs of all cells that can cover a location of the OBU, compare the obtained cell IDs with cell IDs corresponding to a plurality of pre-stored target base stations, and if there is a cell ID that is the same as the pre-stored cell ID corresponding to the target base station, determine that the vehicle enters an electronic fence, that is, determine that the OBU is at a target location.

The pre-stored target base station is a base station that broadcasts a cell whose coverage can cover an RSU that needs to perform C-V2X communication. For example, in FIG. 12 and FIG. 13, an RSU 11 is disposed at a detection point 13, and the detection point 13 is a gantry. Cell coverage of the first base station 101 and the third base station 103 covers the RSU 11. In the scenarios shown in FIG. 12 and FIG. 13, the first base station 101 and the third base station 103 may be used as the pre-stored target base stations. That is, cell IDs corresponding to the first base station 101 and the third base station 103 may be pre-stored in a memory of the OBU.

As an example, the vehicle 12 shown in FIG. 12 is located within coverage of a cell of the second base station 102, and the OBU in the vehicle 12 is connected to the second base station 102 by using a mobile communications module. A list of cell IDs received by the OBU includes only the cell whose ID is 00002. The first base station 101 and the third base station 103 are the pre-stored target base stations. Therefore, when the vehicle 12 travels to a location shown in FIG. 13, the OBU may receive two cell IDs: 00001 and 00002. If the OBU determines that the cell ID 00001 is a pre-stored cell ID corresponding to the target base station, it is determined that the OBU enters a range of the electronic fence, that is, it is determined that the OBU is at the target location. An AP or a mobile communications module sends, to a BP, an AT instruction for activating a C-V2X module. After receiving the AT instruction, the BP activates the C-V2X module based on the AT instruction.

After the C-V2X module is activated and performs an ETC transaction, if the AP detects that the C-V2X module sends a transaction completion instruction to an RSU, the AP may send, to the BP, an AT instruction for deactivating the C-V2X module, so that the C-V2X module enters a dormant state timely, thereby reducing power consumption and extending a battery life.

It should be further noted that, referring to FIG. 12 and FIG. 13, to enable C-V2X modules in vehicles that travel in both directions to be activated timely, a plurality of base stations that can cover the detection point 13 may be set as target base stations. For example, both the cell IDs corresponding to the first base station and the third base station may be stored in the memory of the OBU.

However, in this case, when traveling, the vehicle 12 may first search for a number of a cell ID corresponding to the first base station 101, activate the C-V2X module, complete a transaction, and deactivate the C-V2X module. Then, the vehicle 12 travels into the coverage of the third base station 103, and searches for the cell ID corresponding to the third base station, causing a problem of repeated activation.

In this case, IDs of cells covering a same detection point may be grouped. After the OBU completes a transaction, if an ID of a cell belonging to a same group is found within a preset time period, this search may be ignored, and activation is not performed. The preset time period may be calculated based on a radius of coverage of a base station and a speed limit of a toll road. For example, a coverage radius of an LTE base station is about 1 to 3 km. If a speed limit of a toll road is 100 km/h, a maximum coverage diameter of the base station is divided by 80% of the speed limit, that is, 6 km is divided by 80 km/h. An obtained preset time period should be greater than 4.5 minutes. However, this does not constitute a limitation.

In the following embodiment, automatic determining is described by using an example in which the electronic fence module includes an AP and a positioning module.

In another implementation, the electronic fence module includes an AP and a positioning module. The positioning module may be a GPS module, a BeiDou positioning module, or the like. The positioning module is configured to obtain location information of an OBU. Coordinates and radii of a plurality of electronic fences are pre-stored in the OBU. If the AP determines that a location of the OBU is within coverage of the pre-stored electronic fence, the AP determines that a vehicle enters the electronic fence, and determines that the OBU is at a target location.

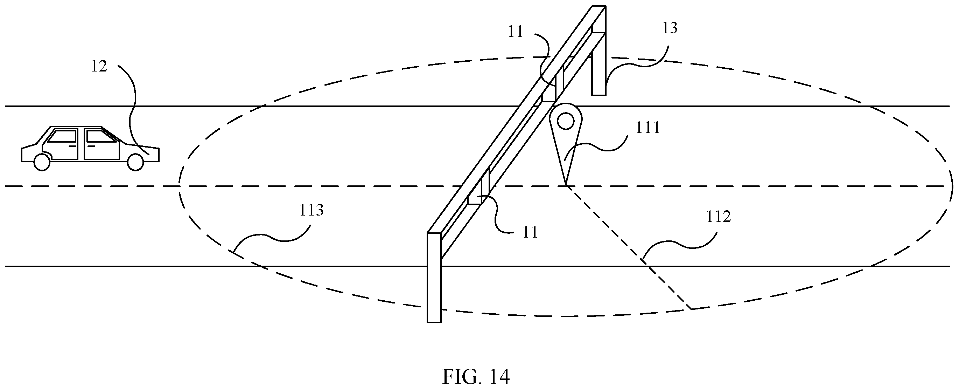

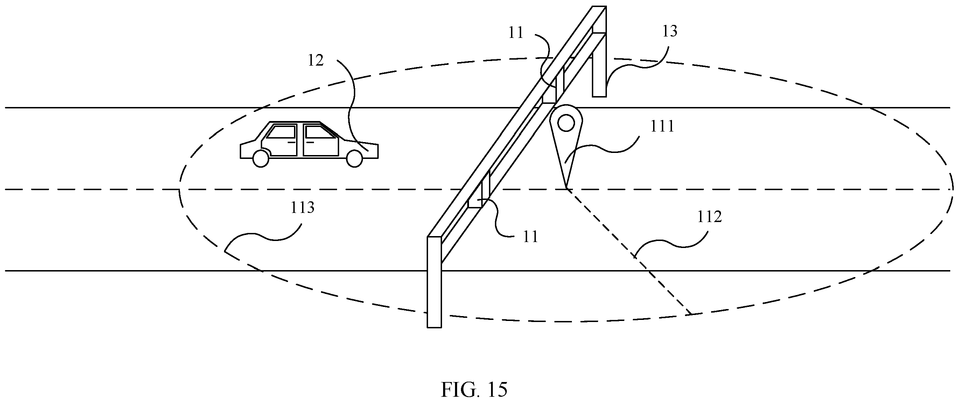

For example, refer to FIG. 14 and FIG. 15. Coordinates 111 of an electronic fence may be set at a central location of a detection point 13, and a radius of the electronic fence may be set based on a speed limit of a toll road and a location of an RSU 11. For example, it is assumed that a speed limit of a toll road is 100 km/h, and the RSU 11 is disposed at the detection point 13. If it takes 1 second for an OBU to wake up a C-V2X module, and it takes 1 second for the OBU to perform a transaction with the RSU, a radius of an electronic fence may be set to 65 meters (a distance of traveling at 80% of the speed limit for 3 seconds), to ensure that an OBU in a vehicle 12 has sufficient time to activate a C-V2X module, and has sufficient time to perform a transaction with the RSU 11. Alternatively, if the RSU 11 is disposed at an entrance or an exit of a toll road, a speed limit may not be considered, and a radius of an electronic fence may be directly set to 20 meters, 50 meters, or the like. This is not limited herein.

As an example, a vehicle 12 shown in FIG. 14 is located outside coverage 113 of an electronic fence. An OBU in the vehicle 12 obtains positioning information. An electronic fence module determines, based on the positioning information, that the vehicle 12 does not enter the electronic fence, and maintains a dormant state of a C-V2X module. When the vehicle 12 travels to a location shown in FIG. 15, an AP determines, based on positioning information, that the vehicle 12 enters the electronic fence, and determines that the OBU is at a target location. The AP or positioning module sends, to a BP, an AT instruction for activating the C-V2X module. After receiving the AT instruction, the BP activates the C-V2X module based on the AT instruction.

After the C-V2X module is activated and performs an ETC transaction, if the AP detects that the C-V2X module sends a transaction completion instruction to an RSU, the AP may send, to the BP, an AT instruction for deactivating the C-V2X module, so that the C-V2X module enters a dormant state timely, thereby reducing power consumption and extending a battery life.

It should be noted that coverage of an electronic fence is a circle or a sector, and therefore covers some areas outside a toll road. A vehicle that does not travel on the toll road but has an OBU supporting C-V2X may be incorrectly determined, and activate a C-V2X module, thereby increasing power consumption or causing a false charging.

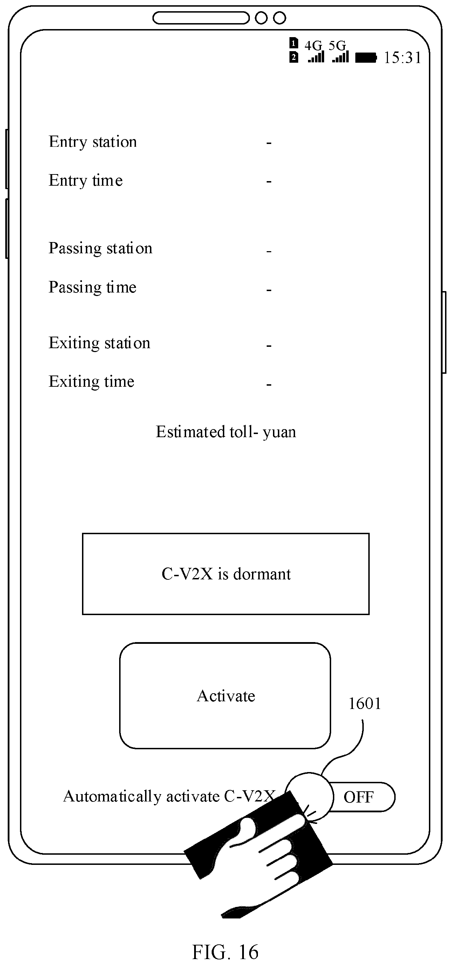

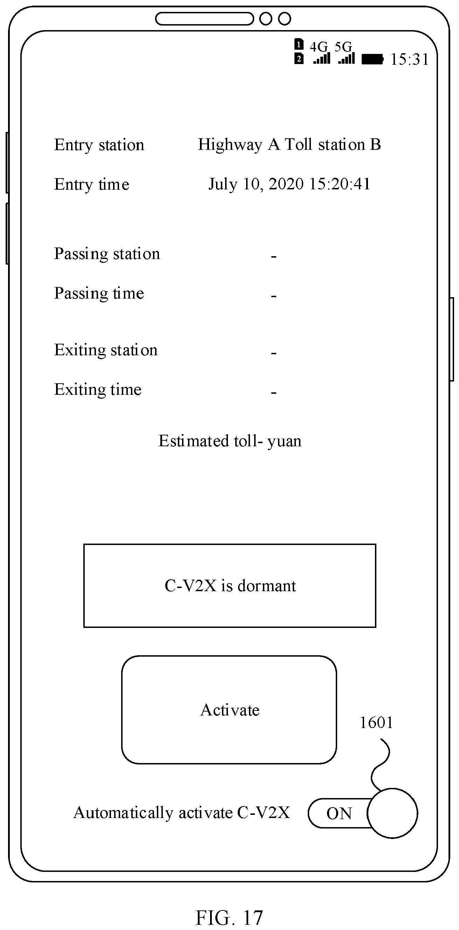

For this, refer to interfaces of an ETC charging application program shown in FIG. 16 and FIG. 17. An on/off button 1601 for enabling automatically activating C-V2X is included. Refer to FIG. 16. In a default setting, after the application program is started, if it is not identified that a toll road has been entered, automatically activating C-V2X is disabled, to avoid the foregoing misoperation. When a tap operation or a slide operation performed on the on/off button 1601 is received, automatically activating C-V2X may be enabled, to implement the method provided in this embodiment.

Optionally, refer to FIG. 17. When the application program is started, it is identified that a toll road has been entered (transaction information of an entry station exists), and automatically activating C-V2X may be enabled, to implement the method provided in this embodiment.

This application may further provide an implementation. In addition to the C-V2X module, the OBU further needs to include a camera module. The camera module may be a camera integrated on the OBU, an event data recorder disposed in a vehicle, a camera disposed outside the vehicle, or the like. A form of the camera module is not limited.

The camera module is configured to obtain an image in front of the vehicle. The OBU can identify whether there are devices used for ETC in the image, such as an RSU monitoring point, a toll road gate, and a channelization island. If the OBU detects that there are devices used for ETC in the image, it is determined that the OBU is at the target location. An AT instruction for activating the C-V2X module is sent to a BP. After receiving the AT instruction, the BP activates the C-V2X module based on the AT instruction.

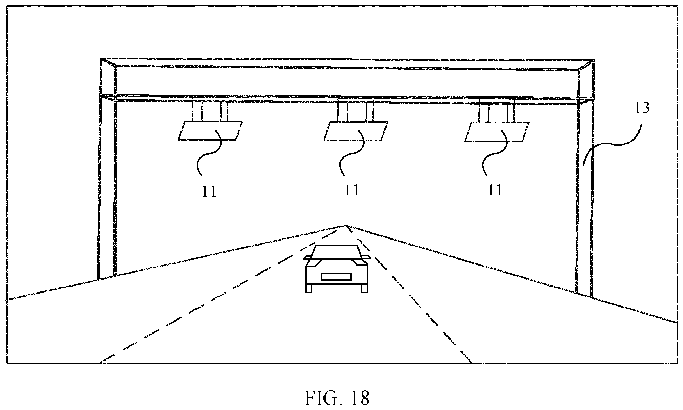

As an example, refer to FIG. 18. FIG. 18 shows a frame image obtained by a camera module, including a detection point 13 and a plurality of RSUs 11 disposed at the detection point 13. After obtaining FIG. 18, an OBU may identify whether FIG. 18 includes devices used for ETC. For example, FIG. 18 may be sent to a server, and the server identifies, based on a pre-trained image recognition model, whether there are the devices used for ETC in the image. Alternatively, the pre-trained image recognition model may be integrated into the foregoing ETC charging application program. After obtaining the frame image, the OBU identifies, by using the image recognition model provided by the application program, whether there are the devices used for the ETC in the frame image.

If the devices used for ETC (for example, the detection point 13 and the plurality of RSUs 11 are included in FIG. 18) are identified in the frame image, it is determined that the OBU is at the target location.

By automatically detecting whether the OBU is at the target location and automatically activating and deactivating the C-V2X module, the C-V2X module may be activated in an area in which C-V2X communication needs to be performed, and the C-V2X module is disabled after a transaction is completed. Because the activation is automatically performed by using an electronic fence or an image recognition method, an operation frequency of a user can be reduced, automation of performing ETC by the C-V2X module can be improved, and power consumption of the OBU can be effectively reduced.

S33: Receive, by using the C-V2X module, transaction information sent by the RSU.

S34: Perform a transaction with the RSU based on the transaction information by using the C-V2X module.

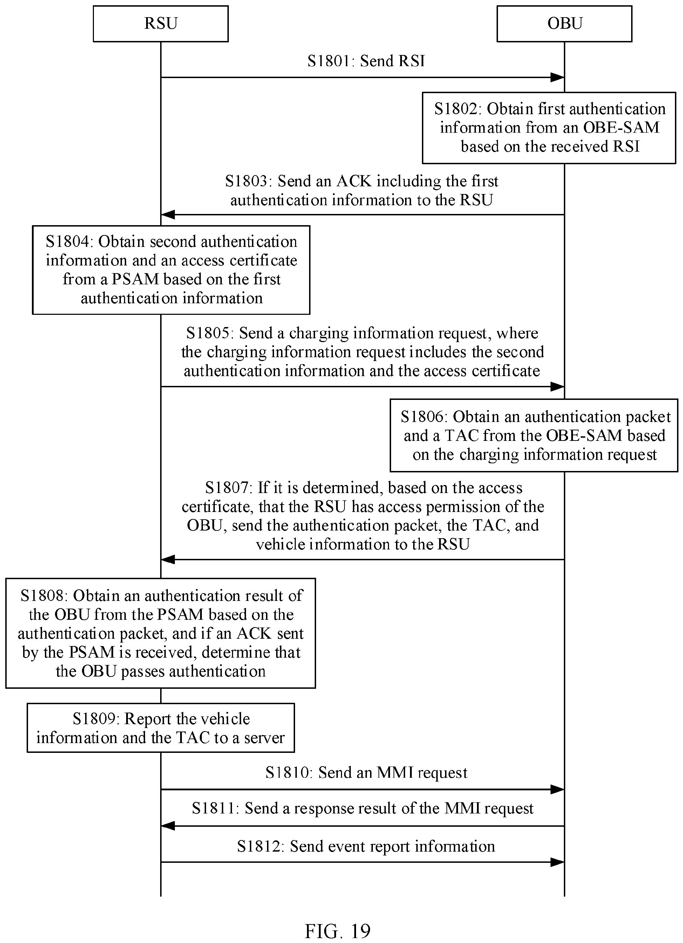

In some implementations, that the OBU performs an ETC transaction with the RSU may include a solution of five interactions or a solution of seven interactions. FIG. 19 shows a solution of five interactions.

Refer to FIG. 19. A process of performing an ETC transaction between an OBU and an RSU includes the following steps.

S1801: The RSU broadcasts RSI; after detecting the broadcast RSI, the OBU establishes a communication connection between the RSU and the OBU; and the OBU receives the RSI sent by the RSU.

In some implementations, the communication connection between the RSU and the OBU may be established by using C-V2X modules through LTE-V or NR-V That is, the C-V2X modules of the RSU and the OBU respectively access a cellular mobile network through LTE or NR, and then the C-V2X modules of the RSU and the OBU communicate with each other through the cellular mobile network. Alternatively, the C-V2X modules in the RSU and the OBU may directly communicate with each other based on the V2X protocol. This is not limited herein.

The RSI includes an information file of a station at which the RSU is located. For example, when an RSU is located at a toll road entrance, the RSI includes a toll road network number, a toll station number, a toll lane number, a time, a passing status, and the like that are corresponding to the RSU.

S1802: The OBU obtains first authentication information from an OBE-SAM based on the received RSI.

It should be noted that the OBE-SAM stores vehicle information, a key file, a transaction record file, and the like that are corresponding to OBE. The first authentication information obtained by the OBU from the OBE-SAM based on the RSI is a random number Rand 1 (OBE) generated based on the key file in the OBE-SAM.

In some implementations, the first authentication information is a random number (Rand 1 (OBE)) that is of the OBE and that is obtained by the OBE-SAM based on the RSI.

S1803: The OBU sends an ACK including the first authentication information to the RSU.

S1804: The RSU obtains second authentication information and an access certificate from a PSAM based on the first authentication information.

In some implementations, the PSAM is configured to: authenticate validity of the OBU by using the first authentication information, and if the authentication succeeds, generate the second authentication information and the access certificate. The second authentication information is a random number (Rand 2 (RSE)) obtained in the PSAM based on the first authentication information. The access certificate is used to obtain permission to read data in the OBU, so that the OBU can perform unidirectional authentication on the RSU.

S1805: The RSU sends a charging information request to the OBU, where the charging information request includes the second authentication information and the access certificate.

S1806: The OBU obtains an authentication packet and a TAC from the OBE-SAM based on the charging information request.

In some implementations, after the OBU authenticates, based on the access certificate, that the RSU has permission to read data in the OBU, the OBU generates the authentication packet through calculation based on the key file in the OBE-SAM. Then, the TAC is obtained from the OBE-SAM based on the charging information request as a pass.

S1807: If it is determined, based on the access certificate, that the RSU has access permission of the OBU, the OBU sends the authentication packet, the TAC, and the vehicle information to the RSU.

S1808: The RSU obtains an authentication result of the OBU from the PSAM based on the authentication packet, and if an ACK sent by the PSAM is received, determines that the OBU passes authentication.

S1809: The RSU reports the vehicle information and the TAC to a server.

S1810: The RSU sends an MMI request to the OBU.

S1811: The OBU sends a response result of the MMI request to the RSU.

In some implementations, the MMI request is used to instruct the OBU to display a transaction result.

For example, refer to FIG. 6. A C-V2X module in a smartphone receives an MMI request sent by an RSU. The MMI request may include indicating the C-V2X module to display that a transaction is completed at a detection point C of a highway A at 15:28:12 on July 10, 2020. After receiving the MMI request, the C-V2X module in the smartphone sends MMI information included in the MMI request to an AP. The AP displays the received MMI request on an interface of an application program based on the MMI information, and notifies, through vibration, playing an announcement, or the like, a user that the transaction is completed.

In some implementations, after receiving the MMI information, the AP may send, to a BP, an instruction for instructing to deactivate the C-V2X module, to deactivate the C-V2X module, so that the C-V2X module enters a dormant state.

S912: The RSU sends event report information to the OBU, and the OBU disconnects the communication connection to the RSU.

In some implementations, after receiving the MMI information, the AP waits for the OBU to determine that the event report information sent by the RSU is received, and disconnect the communication connection to the RSU; and then sends, to the BP, an instruction for instructing to deactivate the C-V2X module, to deactivate the C-V2X module, so that the C-V2X module enters a dormant state. The event report information is used to instruct that the OBU completes a transaction with the RSU.

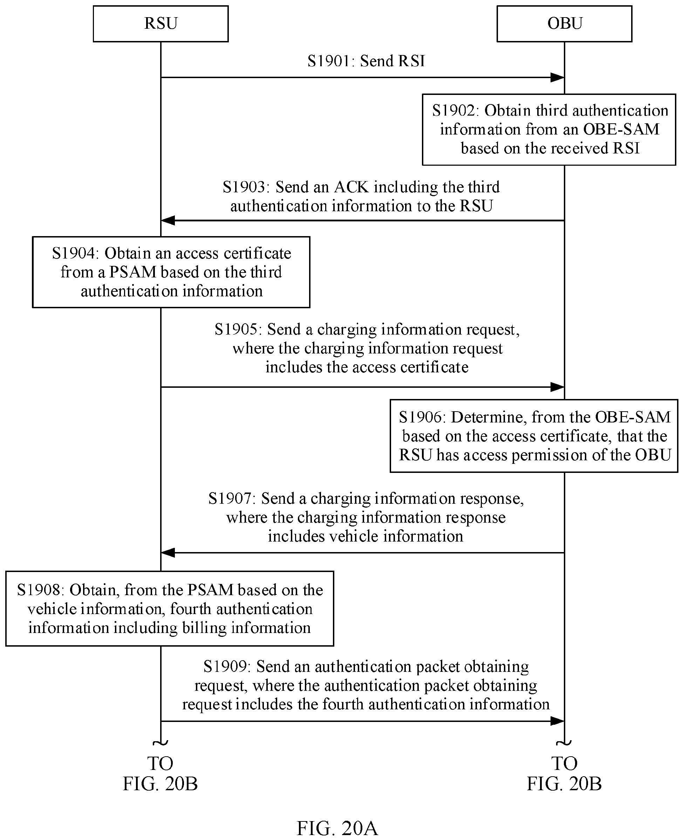

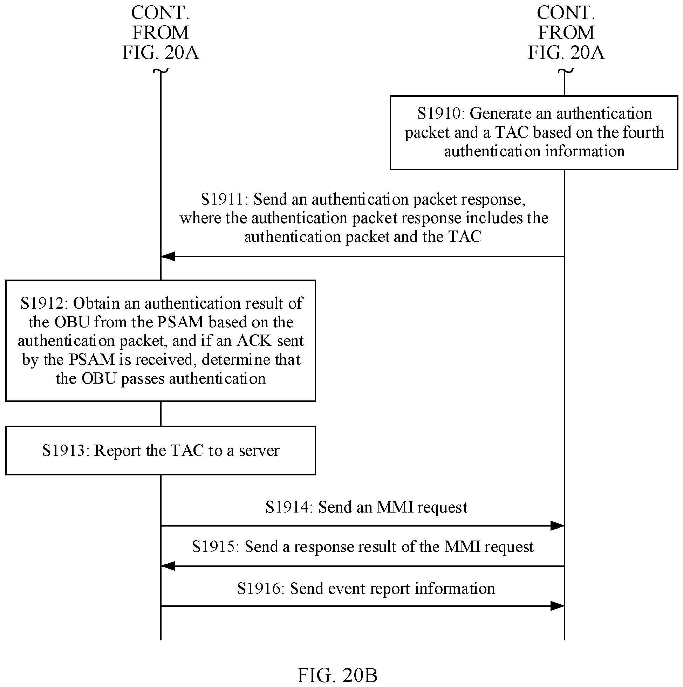

FIG. 20A and FIG. 20B shows a solution of seven interactions.

Refer to FIG. 20A and FIG. 20B. In some other implementations, a process of performing an ETC transaction between an OBU and an RSU includes the following steps.

S1901: The RSU broadcasts RSI; after detecting the broadcast RSI, the OBU establishes a communication connection between the RSU and the OBU; and the OBU receives the RSI sent by the RSU.

S1902: The OBU obtains third authentication information from an OBE-SAM based on the received RSI.

S 1903: The OBU sends an ACK including the third authentication information to the RSU.

S1904: The RSU obtains an access certificate from a PSAM based on the third authentication information.

S1905: The RSU sends a charging information request to the OBU, where the charging information request includes the access certificate.

S1906: The OBU determines, from the OBE-SAM based on the access certificate, that the RSU has access permission of the OBU.

S1907: The OBU sends charging response information to the RSU, where the charging information response includes vehicle information.

S 1908: The RSU obtains, from the PSAM based on the vehicle information, fourth authentication information including billing information.

S1909: The RSU sends an authentication packet obtaining request to the OBU, where the authentication packet obtaining request includes the fourth authentication information.

S1910: The OBU generates an authentication packet and a TAC based on the fourth authentication information.

S1911: Send an authentication packet response, where the authentication packet response includes the authentication packet and the TAC.

S 1912: The RSU obtains an authentication result of the OBU from the PSAM based on the authentication packet, and if an ACK sent by the PSAM is received, determines that the OBU passes authentication.

S1913: The RSU reports the TAC to a server.

S1914: The RSU sends an MMI request to the OBU.

S1915: The OBU sends a response result of the MMI request to the RSU.

S1916: The RSU sends event report information to the OBU, and the OBU disconnects the communication connection to the RSU.

In the solution of seven interactions, the third authentication information is equivalent to the first authentication information in the solution of five interactions, and the fourth authentication information is equivalent to the second authentication information in the solution of five interactions.

Steps S1904 to S1913 are equivalent to steps S904 to S909 in the solution of five interactions. Implementation methods thereof are similar, and details are not described herein again.

S35: When detecting that the transaction is completed, the OBU sends a deactivation instruction to the C-V2X module.

In some implementations, when the vehicle passes the RSU, the C-V2X module in the OBU communicates with the C-V2X module in the RSU to complete an ETC transaction. After the ETC transaction is completed, the OBU sends a deactivation AT instruction to the C-V2X module. The C-V2X module responds to the deactivation instruction, stops working, and does not send or receive C-V2X information. For example, after a transaction is completed, an AP sends an AT instruction for deactivating C-V2X to a BP, for example, "AT^VMODE=0". The BP deactivates a C-V2X module based on the received AT instruction.

In this embodiment, after the ETC transaction is completed, the C-V2X module is deactivated, and the C-V2X module may be disabled when C-V2X does not need to be used, so that power consumption of the OBU is reduced, and a battery life of the OBU is improved.

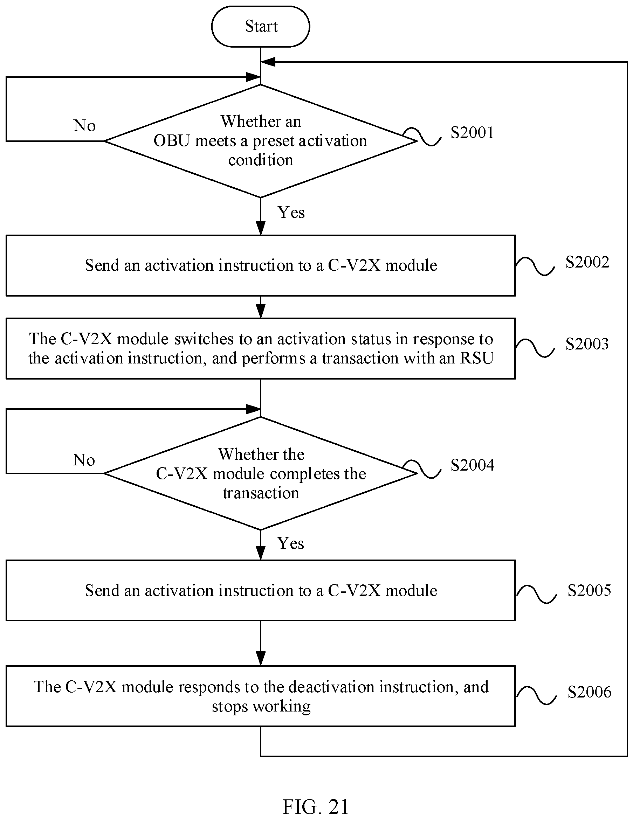

FIG. 21 is a schematic flowchart of a low power consumption method for C-V2X. Refer to FIG. 21. The method includes the following steps.

S2001: Detect whether an OBU meets a preset activation condition; and if the OBU meets the preset activation condition, perform S2002; otherwise, continue detection.

In some implementations, for detecting whether the OBU meets the preset activation condition, refer to the method shown in S31 and S32. Details are not described herein again.

S2002: After it is determined that the OBU meets the preset activation condition, send an activation instruction to a C-V2X module.

In some implementations, after it is manually or automatically determined that the OBU is at a target location, an AP, a positioning module, or a mobile communications module may send, to a BP, an AT instruction for activating the C-V2X module. After receiving the AT instruction, the BP activates the C-V2X module based on the AT instruction. After being activated, the C-V2X module starts to receive and send C-V2X information.

S2003: The C-V2X module switches to an activation status in response to the activation instruction, and performs a transaction with the RSU.

In some implementations, the C-V2X module performs a transaction with a C-V2X module in the RSU based on the V2X protocol. A transaction process may be the solution of five interactions shown in S 1801 to S1811, or the solution of seven interactions shown in S1901 to S1916. This is not limited herein.

S2004: Detect whether the C-V2X module completes the transaction; and if the C-V2X module completes the transaction, perform S2005; otherwise, continue detection.

In some implementations, referring to the foregoing interaction solution, when the OBU receives event report information sent by the RSU, it may be determined that the C-V2X module completes the transaction.

S2005: Send a deactivation instruction to the C-V2X module.

S2006: The C-V2X module responds to the deactivation instruction, and stops working. In addition, it is still detected whether the OBU meets the preset activation condition.

In some implementations, the deactivation instruction sent in S2005 and S2006 is the same as that in S35, and details are not described herein again.

In this embodiment, if the OBU detects that the OBU is at the target location, it is determined that a vehicle is close to an area in which an ETC transaction needs to be performed. The OBU sends the activation instruction to the C-V2X module. After receiving the activation instruction, the C-V2X module switches to the activation status, starts to receive and send the C-V2X information, and performs the transaction with the RSU. After the transaction is completed, the OBU sends the deactivation instruction to the C-V2X module, so that the C-V2X module stops working. In this way, the C-V2X module in the OBU is woken up before the transaction with the RSU is performed, and stops working after the transaction is completed, and does not need to keep an activation status all the time. This can effectively reduce power consumption of the OBU and improve a battery life of the OBU.

It should be understood that sequence numbers of the steps do not mean execution sequences in the foregoing embodiments. The execution sequences of the processes should be determined based on functions and internal logic of the processes, and should not be construed as any limitation on the implementation processes of embodiments of this application.

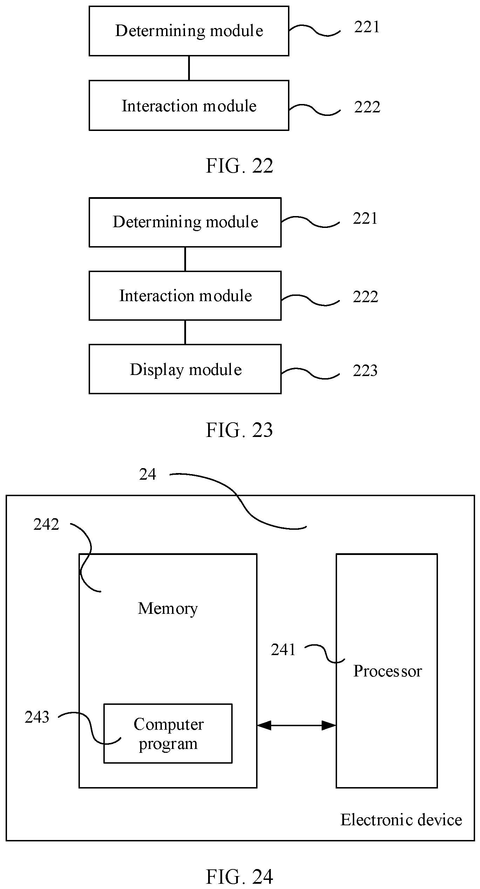

Corresponding to the low power consumption method for C-V2X in the foregoing embodiments, FIG. 22 is a block diagram of a structure of a low power consumption apparatus for C-V2X according to an embodiment of this application. For ease of description, only parts related to embodiments of this application are shown.

Refer to FIG. 22. An embodiment of this application provides a low power consumption apparatus for C-V2X, applied to a first electronic device. The first electronic device supports a C-V2X function. The apparatus includes a determining module 221 and an interaction module 222.

The determining module 221 is configured to: when it is determined that a first electronic device is at a target location, activate a C-V2X function of the first electronic device. The interaction module 222 is configured to perform data exchange between the first electronic device and a second electronic device based on the C-V2X protocol. The determining module 221 is further configured to: when it is determined that the first electronic device completes data exchange with the second electronic device, deactivate the C-V2X function of the first electronic device.

In some implementations, the first electronic device includes a control component.

The determining module 221 is specifically configured to: if the control component receives a first control operation, determine that the first electronic device is at the target location, where the first control operation is used to indicate to activate the C-V2X function of the first electronic device.

In some implementations, the first electronic device includes a positioning component.

The determining module 221 is specifically configured to: if the positioning component receives information about a geographical location within a preset geographical location range, determine that the first electronic device is at the target location.

In some implementations, the first electronic device includes a cellular communications component.

The determining module 221 is specifically configured to: if base station feature information received by the cellular communications component includes feature information of a preset base station, determine that the first electronic device is at the target location.

In some implementations, the interaction module 222 is specifically configured to: receive roadside information sent by the second electronic device; determine, based on the roadside information, that the second electronic device has permission to access the first electronic device; generate an authentication packet used to indicate the access permission and a transaction authentication code used to indicate transaction information, and send the authentication packet and the transaction authentication code to the second electronic device; receive a man-machine interaction interface request sent by the second electronic device based on the authentication packet and the transaction authentication code; respond to the man-machine interaction interface request, and send a response result of the man-machine interaction interface request to the second electronic device; and receive event report information sent by the second electronic device based on the response result of the man-machine interaction interface request, where the event report information is used to indicate that the first electronic device completes data exchange with the second electronic device.

In some implementations, the determining module 221 is specifically configured to: if the event report information is received, determine that the first electronic device completes data exchange with the second electronic device.

In some implementations, the first electronic device includes a control component.

The determining module 221 is specifically configured to: if the control component receives a second control operation, determine that the first electronic device completes data exchange with the second electronic device, where the second control operation is used to indicate to deactivate the C-V2X function of the first electronic device.

In some implementations, the first electronic device includes a positioning component.

The determining module 221 is specifically configured to: if the positioning component receives information about a geographical location outside a preset geographical location range, determine that the first electronic device completes data exchange with the second electronic device.

In some implementations, the first electronic device includes a cellular communications component.

The determining module 221 is specifically configured to: if base station feature information received by the cellular communications component does not include feature information of a preset base station, determine that the first electronic device completes data exchange with the second electronic device.

In some implementations, the first electronic device includes a display component configured to display a display interface.

Refer to FIG. 23. The apparatus further includes a display module 223, configured to display, on a display interface, prompt information indicating that a C-V2X function is activated.

In some implementations, the display module 223 is further configured to display, on the display interface, prompt information of data exchange.

In some implementations, the display module 223 is further configured to display, on the display interface, prompt information indicating that the C-V2X function is deactivated.

In some implementations, a first electronic device includes a control component, a positioning component, a cellular communications component, and a display component that is configured to display a display interface.

A determining module 221 is specifically configured to: if the control component receives a first control operation, determine that the first electronic device is at a target location, where the first control operation is used to indicate to activate a C-V2X function of the first electronic device; or if the positioning component receives geographical location information within a preset geographical location range, determine that the first electronic device is at a target location; or if the base station feature information received by the cellular communications component includes feature information of a preset base station, determine that the first electronic device is at a target location.

An interaction module 222 is specifically configured to: receive roadside information sent by a second electronic device; determine, based on the roadside information, that the second electronic device has permission to access the first electronic device; generate an authentication packet used to indicate the access permission and a transaction authentication code used to indicate transaction information, and send the authentication packet and the transaction authentication code to the second electronic device; receive a man-machine interaction interface request sent by the second electronic device based on the authentication packet and the transaction authentication code; respond to the man-machine interaction interface request, and send a response result of the man-machine interaction interface request to the second electronic device; and receive event report information sent by the second electronic device based on the response result of the man-machine interaction interface request, where the event report information is used to indicate that the first electronic device completes data exchange with the second electronic device.

The determining module 221 is specifically configured to: if the event report information is received, determine that the first electronic device completes data exchange with the second electronic device; or if the control component receives a second control operation, determine that the first electronic device completes data exchange with the second electronic device, where the second control operation is used to indicate to deactivate a C-V2X function of the first electronic device; or if the positioning component receives geographical location information outside a preset geographical location range, determine that the first electronic device completes data exchange with the second electronic device; or if base station feature information received by the cellular communications component does not include feature information of a preset base station, determine that the first electronic device completes data exchange with the second electronic device.

The apparatus further includes a display module 223, configured to display, on a display interface, prompt information indicating that a C-V2X function is activated.

The display module 223 is further configured to display, on the display interface, the prompt information of data exchange.

The display module 223 is further configured to display, on the display interface, the prompt information indicating that the C-V2X function is deactivated.

It should be noted that content such as information exchange between the foregoing modules and an execution process thereof is based on a same concept as the method embodiments of this application. For details about specific functions and technical effects of the content, refer to the method embodiments. The details are not described herein again.

A person skilled in the art may clearly understand that, for the purpose of convenient and brief description, division into the foregoing function units or modules is merely used as an example for illustration. During actual application, the foregoing functions may be allocated to different function units or modules for implementation based on a requirement, that is, an inner structure of an apparatus is divided into different function units or modules to implement all or some of the functions described above. Function units and modules in embodiments may be integrated into one processing unit, or each of the units may exist alone physically, or two or more units may be integrated into one unit. The integrated unit may be implemented in a form of hardware, or may be implemented in a form of a software function unit. In addition, specific names of the function units and modules are merely for ease of distinguishing between the function units and modules, but are not intended to limit the protection scope of this application. For a specific working process of the units or modules in the foregoing system, refer to a corresponding process in the foregoing method embodiments. Details are not described herein again.

FIG. 24 is a schematic diagram of a structure of an electronic device according to an embodiment of this application. As shown in FIG. 24, the electronic device 24 in this embodiment includes: at least one processor 241 (only one processor is shown in FIG. 24), a memory 242, and a computer program 243 that is stored in the memory 242 and that can run on the at least one processor 241. When executing the computer program 243, the processor 241 implements steps of the following low power consumption method for C-V2X:
when it is determined that the electronic device is at a target location, activating a C-V2X function of the first electronic device; performing, by the electronic device, data exchange with a second electronic device based on the C-V2X protocol; and when it is determined that the electronic device completes data exchange with the second electronic device, deactivating the C-V2X function of the electronic device.

In some implementations, a first electronic device includes a control component.

That it is determined that the first electronic device is at a target location includes: If the control component receives a first control operation, it is determined that the first electronic device is at the target location, where the first control operation is used to indicate to activate a C-V2X function of the first electronic device.

In some implementations, the first electronic device includes a positioning component.

That it is determined that the first electronic device is at a target location includes: If the positioning component receives information about a geographical location within a preset geographical location range, it is determined that the first electronic device is at the target location.

In some implementations, the first electronic device includes a cellular communications component.

That it is determined that the first electronic device is at a target location includes: If base station feature information received by the cellular communications component includes feature information of a preset base station, it is determined that the first electronic device is at the target location.

In some implementations, that the first electronic device performs data exchange with the second electronic device based on the C-V2X protocol includes: receiving roadside information sent by the second electronic device; determining, based on the roadside information, that the second electronic device has permission to access the first electronic device; generating an authentication packet used to indicate the access permission and a transaction authentication code used to indicate transaction information, and sending the authentication packet and the transaction authentication code to the second electronic device; receiving a man-machine interaction interface request sent by the second electronic device based on the authentication packet and the transaction authentication code; responding to the man-machine interaction interface request, and sending a response result of the man-machine interaction interface request to the second electronic device; and receiving event report information sent by the second electronic device based on the response result of the man-machine interaction interface request, where the event report information is used to indicate that the first electronic device completes data exchange with the second electronic device.

In some implementations, determining that the first electronic device completes data exchange with the second electronic device includes: if event report information is received, determining that the first electronic device completes data interaction with the second electronic device.

In some implementations, a first electronic device includes a control component.

That it is determined that the first electronic device completes data exchange with the second electronic device includes: If the control component receives a second control operation, it is determined that the first electronic device completes data exchange with the second electronic device, where the second control operation is used to indicate to deactivate the C-V2X function of the first electronic device.

In some implementations, the first electronic device includes a positioning component.

That it is determined that the first electronic device completes data exchange with the second electronic device includes: If the positioning component receives geographical location information outside a preset geographical location range, it is determined that the first electronic device completes data exchange with the second electronic device.

In some implementations, the first electronic device includes a cellular communications component.

That it is determined that the first electronic device completes data exchange with the second electronic device includes: If base station feature information received by the cellular communications component does not include feature information of a preset base station, it is determined that the first electronic device completes data exchange with the second electronic device.

In some implementations, the first electronic device includes a display component configured to display a display interface.

After the activating the C-V2X function of the first electronic device, the method further includes: displaying, on the display interface, prompt information indicating that the C-V2X function is activated.

In some implementations, when the first electronic device performs data exchange with the second electronic device based on the C-V2X protocol, the method further includes: displaying prompt information of the data exchange on the display interface.

In some implementations, after the deactivating the C-V2X function of the first electronic device, the method further includes:
displaying, on the display interface, prompt information indicating that the C-V2X function is deactivated.

In some implementations, the first electronic device includes a control component, a positioning component, a cellular communications component, and a display component that is configured to display a display interface.

That it is determined that the first electronic device is at a target location includes: If the control component receives the first control operation, it is determined that the first electronic device is at the target location, where the first control operation is used to indicate to activate the C-V2X function of the first electronic device; or if the positioning component receives geographical location information within a preset geographical location range, it is determined that the first electronic device is at the target location; or if the base station feature information received by the cellular communications component includes feature information of a preset base station, it is determined that the first electronic device is at the target location.

That the first electronic device performs data exchange with the second electronic device based on the C-V2X protocol includes: receiving the roadside information sent by the second electronic device; determining, based on the roadside information, that the second electronic device has the permission to access the first electronic device; generating the authentication packet used to indicate the access permission and the transaction authentication code used to indicate the transaction information, and sending the authentication packet and the transaction authentication code to the second electronic device; receiving the man-machine interaction interface request sent by the second electronic device based on the authentication packet and the transaction authentication code; responding to the man-machine interaction interface request, and sending the response result of the man-machine interaction interface request to the second electronic device; and receiving the event report information sent by the second electronic device based on the response result of the man-machine interaction interface request, where the event report information is used to indicate that the first electronic device completes data exchange with the second electronic device.

That it is determined that the first electronic device completes data exchange with the second electronic device includes: if the event report information is received, it is determined that the first electronic device completes data exchange with the second electronic device; or if the control component receives a second control operation, it is determined that the first electronic device completes data exchange with the second electronic device, where the second control operation is used to indicate to deactivate a C-V2X function of the first electronic device; or if the positioning component receives geographical location information outside a preset geographical location range, it is determined that the first electronic device completes data exchange with the second electronic device; or if base station feature information received by the cellular communications component does not include feature information of a preset base station, it is determined that the first electronic device completes data exchange with the second electronic device.

After the activating the C-V2X function of the first electronic device, the method further includes: displaying, on the display interface, the prompt information indicating that the C-V2X function is activated.

When the first electronic device performs data exchange with the second electronic device based on the C-V2X protocol, the method further includes: displaying the prompt information of the data exchange on the display interface.

After the deactivating the C-V2X function of the first electronic device, the method further includes: displaying, on the display interface, the prompt information indicating that the C-V2X function is deactivated.

The electronic device 24 may be a computing device such as a desktop computer, a notebook computer, a palmtop computer, or a cloud server. The electronic device 24 may include but is not limited to the processor 241 and the memory 242. A person skilled in the art may understand that FIG. 24 is only an example of the electronic device 24, and does not constitute a limitation on the electronic device 24. The call device may include more or fewer components than those shown in the figure, or some components may be combined, or different components may be used. For example, the call device may further include an input/output device, or a network access device.

The processor 241 may be a central processing unit (Central Processing Unit, CPU), or the processor 241 may be another general purpose processor, a digital signal processor (Digital Signal Processor, DSP), an application-specific integrated circuit (Application Specific Integrated Circuit, ASIC), a field-programmable gate array (Field-Programmable Gate Array, FPGA) or another programmable logic device, a discrete gate or transistor logic component, a discrete hardware component, or the like. The general-purpose processor may be a microprocessor, or the processor may be any conventional processor or the like.

In some embodiments, the memory 242 may be an internal storage unit of the electronic device 24, for example, a hard disk or memory of the electronic device 24. In some other embodiments, the memory 242 may alternatively be an external storage device of the electronic device 24, for example, a plug-in hard disk, a smart media card (Smart Media Card, SMC), a secure digital (Secure Digital, SD) card, or a flash card (Flash Card) that is provided on the electronic device 24. Further, the memory 242 may include both the internal storage unit and the external storage device that are of the electronic device 24. The memory 242 is configured to store an operating system, an application, a bootloader (BootLoader), data, another program, and the like, for example, program code of a computer program. The memory 242 may be further configured to temporarily store data that has been output or is to be output.

An embodiment of this application provides a chip system. The chip system is applied to an electronic device. The chip system includes at least one processor, at least one interface circuit, and a C-V2X chip. The processor, the interface circuit, and the C-V2X chip are interconnected by using a line. When being activated, the C-V2X chip is configured to implement a C-V2X function of the electronic device. The processor receives a computer instruction from the electronic device and executes the following C-V2X low power consumption method: responding to an activation instruction sent when the electronic device is at a target location, and activating the C-V2X chip, to implement the C-V2X function of the electronic device; performing data exchange with a second electronic device based on the C-V2X protocol in response to a data exchange instruction sent by the electronic device; and deactivating the C-V2X chip in response to a deactivation instruction sent by the electronic device when the electronic device determines that the electronic device completes data exchange with the second electronic device. In some implementations, the performing data exchange with a second electronic device based on the C-V2X protocol in response to a data exchange instruction sent by the electronic device includes: receiving roadside information sent by the second electronic device; determining, based on the roadside information, that the second electronic device has permission to access the electronic device; generating an authentication packet used to indicate the access permission and a transaction authentication code used to indicate transaction information, and sending the authentication packet and the transaction authentication code to the second electronic device; receiving a man-machine interaction interface request sent by the second electronic device based on the authentication packet and the transaction authentication code; responding to the man-machine interaction interface request, and sending a response result of the man-machine interaction interface request to the second electronic device; and receiving event report information sent by the second electronic device based on the response result of the man-machine interaction interface request, where the event report information is used to indicate that the electronic device completes data exchange with the second electronic device.

An embodiment of this application further provides a computer-readable storage medium. The computer-readable storage medium stores a computer program. When the computer program is executed by a processor, steps in the foregoing method embodiments can be implemented.

An embodiment of this application provides a computer program product. When the computer program product runs on a mobile terminal, the mobile terminal is enabled to implement the steps in the foregoing method embodiments when executing the computer program product.

When the integrated unit is implemented in the form of a software functional unit and sold or used as an independent product, the integrated unit may be stored in a computer-readable storage medium. Based on such an understanding, in this application, all or some of the procedures of the methods in the foregoing embodiments may be implemented by a computer program instructing related hardware. The computer program may be stored in a computer-readable storage medium. When the computer program is executed by a processor, the steps in the foregoing method embodiments can be implemented. The computer program includes computer program code. The computer program code may be in a source code form, an object code form, an executable file form, some intermediate forms, or the like. The computer-readable medium may include at least any entity or apparatus that can carry the computer program code to an electronic device, a recording medium, a computer memory, a read-only memory (ROM, Read-Only Memory), a random access memory (RAM, Random Access Memory), an electrical carrier signal, a telecommunications signal, and a software distribution medium, for example, a USB flash drive, a removable hard drive, a magnetic disk, or an optical disk. In some jurisdictions, the computer-readable medium cannot be the electrical carrier signal or the telecommunications signal according to legislation and patent practices.

In the foregoing embodiments, descriptions of all embodiments have respective focuses. For a part that is not described in detail or recorded in an embodiment, refer to related descriptions in other embodiments.

A person of ordinary skill in the art may be aware that, in combination with examples described in embodiments disclosed in this specification, units and algorithm steps may be implemented by electronic hardware or a combination of computer software and electronic hardware. Whether the functions are implemented by hardware or software depends on a particular application and a design constraint condition of the technical solutions. A person skilled in the art may use different methods to implement the described functions for each particular application, but it should not be considered that the implementation goes beyond the scope of this application.

In embodiments provided in this application, it should be understood that the disclosed method, apparatus, and the electronic device may be implemented in another manner. For example, the foregoing method, apparatus, and electronic device embodiments are merely examples. For example, division of the modules or units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, in other words, may be located in one position, or may be distributed on a plurality of network units. Some or all of the units may be selected based on actual requirements to achieve the objectives of the solutions of embodiments.

Finally, it should be noted that the foregoing descriptions are merely specific implementations of this application, but are not intended to limit the protection scope of this application. Any variation or replacement within the technical scope disclosed in this application shall fall within the protection scope of this application. Therefore, the protection scope of this application shall be subject to the protection scope of the claims.

## Claims

1. A low power consumption method for cellular vehicle-to-everything C-V2X, applied to a first electronic device, wherein the first electronic device supports a C-V2X function, and the method comprises:
when it is determined that the first electronic device is at a target location, activating the C-V2X function of the first electronic device;
performing, by the first electronic device, data exchange with a second electronic device based on the C-V2X protocol; and
when it is determined that the first electronic device completes data exchange with the second electronic device, deactivating the C-V2X function of the first electronic device.

2. The method according to claim 1, wherein the first electronic device comprises a control component;
that it is determined that the first electronic device is at a target location comprises:
if the control component receives a first control operation, it is determined that the first electronic device is at the target location, wherein the first control operation is used to indicate to activate the C-V2X function of the first electronic device.

3. The method according to claim 1, wherein the first electronic device comprises a positioning component; and
that it is determined that the first electronic device is at a target location comprises:
if the positioning component receives information about a geographical location within a preset geographical location range, it is determined that the first electronic device is at the target location.

4. The method according to claim 1, wherein the first electronic device comprises a cellular communications component; and
that it is determined that the first electronic device is at a target location comprises:
if base station feature information received by the cellular communications component comprises feature information of a preset base station, it is determined that the first electronic device is at the target location.

5. The method according to any one of claims 1 to 4, wherein the performing, by the first electronic device, data exchange with a second electronic device based on the C-V2X protocol comprises:
receiving roadside information sent by the second electronic device;
determining, based on the roadside information, that the second electronic device has permission to access the first electronic device;
generating an authentication packet used to indicate the access permission and a transaction authentication code used to indicate transaction information, and sending the authentication packet and the transaction authentication code to the second electronic device;
receiving a man-machine interaction interface request sent by the second electronic device based on the authentication packet and the transaction authentication code;
responding to the man-machine interaction interface request, and sending a response result of the man-machine interaction interface request to the second electronic device; and
receiving event report information sent by the second electronic device based on the response result of the man-machine interaction interface request, wherein the event report information is used to indicate that the first electronic device completes data exchange with the second electronic device.

6. The method according to claim 5, wherein that it is determined that the first electronic device completes data exchange with the second electronic device comprises:
if the event report information is received, it is determined that the first electronic device completes data exchange with the second electronic device.

7. The method according to claim 1, wherein the first electronic device comprises a control component;
that it is determined that the first electronic device completes data exchange with the second electronic device comprises:
if the control component receives a second control operation, it is determined that the first electronic device completes data exchange with the second electronic device, wherein the second control operation is used to indicate to deactivate the C-V2X function of the first electronic device.

8. The method according to claim 1, wherein the first electronic device comprises a positioning component; and
that it is determined that the first electronic device completes data exchange with the second electronic device comprises:
if the positioning component receives information about a geographical location outside a preset geographical location range, it is determined that the first electronic device completes data exchange with the second electronic device.

9. The method according to claim 1, wherein the first electronic device comprises a cellular communications component; and
that it is determined that the first electronic device completes data exchange with the second electronic device comprises:
if base station feature information received by the cellular communications component does not comprise feature information of a preset base station, it is determined that the first electronic device completes data exchange with the second electronic device.

10. The method according to any one of claims 1 to 9, wherein the first electronic device comprises a display component configured to display a display interface; and
after the activating the C-V2X function of the first electronic device, the method further comprises:
displaying, on the display interface, prompt information indicating that the C-V2X function is activated.

11. The method according to claim 10, wherein during the performing, by the first electronic device, data exchange with a second electronic device based on the C-V2X protocol, the method further comprises:
displaying prompt information of the data exchange on the display interface.

12. The method according to claim 10, wherein after the deactivating the C-V2X function of the first electronic device, the method further comprises:
displaying, on the display interface, prompt information indicating that the C-V2X function is deactivated.

13. The method according to claim 1, wherein the first electronic device comprises a control component, a positioning component, a cellular communications component, and a display component that is configured to display a display interface;
that it is determined that the first electronic device is at a target location comprises:
if the control component receives a first control operation, it is determined that the first electronic device is at the target location, wherein the first control operation is used to indicate to activate the C-V2X function of the first electronic device; or
if the positioning component receives information about a geographical location within a preset geographical location range, it is determined that the first electronic device is at the target location; or
if base station feature information received by the cellular communications component comprises feature information of a preset base station, it is determined that the first electronic device is at the target location;
the performing, by the first electronic device, data exchange with a second electronic device based on the C-V2X protocol comprises:
receiving roadside information sent by the second electronic device;
determining, based on the roadside information, that the second electronic device has permission to access the first electronic device;
generating an authentication packet used to indicate the access permission and a transaction authentication code used to indicate transaction information, and sending the authentication packet and the transaction authentication code to the second electronic device;
receiving a man-machine interaction interface request sent by the second electronic device based on the authentication packet and the transaction authentication code;
responding to the man-machine interaction interface request, and sending a response result of the man-machine interaction interface request to the second electronic device; and
receiving event report information sent by the second electronic device based on the response result of the man-machine interaction interface request, wherein the event report information is used to indicate that the first electronic device completes data exchange with the second electronic device;
that it is determined that the first electronic device completes data exchange with the second electronic device comprises:
if the event report information is received, it is determined that the first electronic device completes data exchange with the second electronic device; or
if the control component receives a second control operation, it is determined that the first electronic device completes data exchange with the second electronic device, wherein the second control operation is used to indicate to deactivate the C-V2X function of the first electronic device; or
if the positioning component receives information about a geographical location outside a preset geographical location range, it is determined that the first electronic device completes data exchange with the second electronic device; or
if the base station feature information received by the cellular communications component does not comprise feature information of a preset base station, it is determined that the first electronic device completes data exchange with the second electronic device;
after the activating the C-V2X function of the first electronic device, the method further comprises: displaying, on the display interface, prompt information indicating that the C-V2X function is activated;
when the first electronic device performs data exchange with the second electronic device based on the C-V2X protocol, the method further comprises: displaying prompt information of the data exchange on the display interface; and
after the deactivating the C-V2X function of the first electronic device, the method further comprises: displaying, on the display interface, prompt information indicating that the C-V2X function is deactivated.

14. An electronic device, comprising a memory, a processor, and a computer program that is stored in the memory and that can run on the processor, wherein the electronic device supports a C-V2X function, and when executing the computer program, the processor implements the following low power consumption method for C-V2X:
when it is determined that the first electronic device is at a target location, activating the C-V2X function of the first electronic device;
performing, by the electronic device, data exchange with a second electronic device based on the C-V2X protocol; and
when it is determined that the electronic device completes data exchange with the second electronic device, deactivating the C-V2X function of the electronic device.

15. The electronic device according to claim 14, wherein the electronic device comprises a control component;
that it is determined that the electronic device is at a target location comprises:
if the control component receives a first control operation, it is determined that the first electronic device is at the target location, wherein the first control operation is used to indicate to activate the C-V2X function of the first electronic device.

16. The electronic device according to claim 14, wherein the electronic device comprises a positioning component;
that it is determined that the electronic device is at a target location comprises:
if the positioning component receives information about a geographical location within a preset geographical location range, it is determined that the electronic device is at the target location.

17. The electronic device according to claim 14, wherein the electronic device comprises a cellular communications component;
that it is determined that the electronic device is at a target location comprises:
if base station feature information received by the cellular communications component comprises feature information of a preset base station, it is determined that the electronic device is at the target location.

18. The electronic device according to any one of claims 14 to 17, wherein the performing, by the electronic device, data exchange with a second electronic device based on the C-V2X protocol comprises:
receiving roadside information sent by the second electronic device;
determining, based on the roadside information, that the second electronic device has permission to access the electronic device;
generating an authentication packet used to indicate the access permission and a transaction authentication code used to indicate transaction information, and sending the authentication packet and the transaction authentication code to the second electronic device;
receiving a man-machine interaction interface request sent by the second electronic device based on the authentication packet and the transaction authentication code;
responding to the man-machine interaction interface request, and sending a response result of the man-machine interaction interface request to the second electronic device; and
receiving event report information sent by the second electronic device based on the response result of the man-machine interaction interface request, wherein the event report information is used to indicate that the electronic device completes data exchange with the second electronic device.

19. The electronic device according to claim 18, wherein that it is determined that the electronic device completes data exchange with the second electronic device comprises:
if the event report information is received, it is determined that the electronic device completes data exchange with the second electronic device.

20. The electronic device according to claim 14, wherein the electronic device comprises a control component;
that it is determined that the electronic device completes data exchange with the second electronic device comprises:
if the control component receives a second control operation, it is determined that the electronic device completes data exchange with the second electronic device, wherein the second control operation is used to indicate to deactivate the C-V2X function of the electronic device.

21. The electronic device according to claim 14, wherein the electronic device comprises a positioning component;
that it is determined that the electronic device completes data exchange with the second electronic device comprises:
if the positioning component receives information about a geographical location outside a preset geographical location range, it is determined that the electronic device completes data exchange with the second electronic device.

22. The electronic device according to claim 14, wherein the electronic device comprises a cellular communications component;
that it is determined that the electronic device completes data exchange with the second electronic device comprises:
if base station feature information received by the cellular communications component does not comprise feature information of a preset base station, it is determined that the electronic device completes data exchange with the second electronic device.

23. The electronic device according to any one of claims 14 to 22, wherein the electronic device comprises a display component configured to display a display interface; and
after the activating the C-V2X function of the electronic device, the method further comprises:
displaying, on the display interface, prompt information indicating that the C-V2X function is activated.

24. The electronic device according to claim 23, wherein during the performing, by the electronic device, data exchange with a second electronic device based on the C-V2X protocol, the method further comprises:
displaying prompt information of the data exchange on the display interface.

25. The electronic device according to claim 23, wherein after the deactivating the C-V2X function of the electronic device, the method further comprises:
displaying, on the display interface, prompt information indicating that the C-V2X function is deactivated.

26. The electronic device according to claim 14, wherein the electronic device comprises a control component, a positioning component, a cellular communications component, and a display component that is configured to display a display interface;
that it is determined that the electronic device is at a target location comprises:
if the control component receives a first control operation, it is determined that the electronic device is at the target location, wherein the first control operation is used to indicate to activate the C-V2X function of the first electronic device; or
if the positioning component receives information about a geographical location within a preset geographical location range, it is determined that the electronic device is at the target location; or
if base station feature information received by the cellular communications component comprises feature information of a preset base station, it is determined that the electronic device is at the target;
the performing, by the electronic device, data exchange with a second electronic device based on the C-V2X protocol comprises:
receiving roadside information sent by the second electronic device;
determining, based on the roadside information, that the second electronic device has permission to access the electronic device;
generating an authentication packet used to indicate the access permission and a transaction authentication code used to indicate transaction information, and sending the authentication packet and the transaction authentication code to the second electronic device;
receiving a man-machine interaction interface request sent by the second electronic device based on the authentication packet and the transaction authentication code;
responding to the man-machine interaction interface request, and sending a response result of the man-machine interaction interface request to the second electronic device; and
receiving event report information sent by the second electronic device based on the response result of the man-machine interaction interface request, wherein the event report information is used to indicate that the electronic device completes data exchange with the second electronic device;
that it is determined that the electronic device completes data exchange with the second electronic device comprises:
if the event report information is received, it is determined that the electronic device completes data exchange with the second electronic device; or
if the control component receives a second control operation, it is determined that the electronic device completes data exchange with the second electronic device, wherein the second control operation is used to indicate to deactivate the C-V2X function of the electronic device; or
if the positioning component receives information about a geographical location outside a preset geographical location range, it is determined that the electronic device completes data exchange with the second electronic device; or
if base station feature information received by the cellular communications component does not comprise feature information of a preset base station, it is determined that the electronic device completes data exchange with the second electronic device;
after the activating the C-V2X function of the electronic device, the method further comprises: displaying, on the display interface, prompt information indicating that the C-V2X function is activated;
when the electronic device performs data exchange with the second electronic device based on the C-V2X protocol, the method further comprises: displaying prompt information of the data exchange on the display interface; and
after the deactivating the C-V2X function of the electronic device, the method further comprises: displaying, on the display interface, prompt information indicating that the C-V2X function is deactivated.

27. A chip system, wherein the chip system is applied to an electronic device, the chip system comprises at least one processor, at least one interface circuit, and a C-V2X chip, the processor, the interface circuit, and the C-V2X chip are interconnected through a line, and the C-V2X chip is configured to implement a C-V2X function of the electronic device when being activated; and the processor receives computer instructions from the electronic device by using the interface circuit, and executes the computer instructions, to implement the following low power consumption method for C-V2X:
activating the C-V2X chip, to implement a C-V2X function of the electronic device in response to an activation instruction sent when the electronic device is at a target location;
performing data exchange with a second electronic device based on the C-V2X protocol in response to a data exchange instruction sent by the electronic device; and
deactivating the C-V2X chip in response to a deactivation instruction sent by the electronic device when the electronic device determines that the electronic device completes data exchange with the second electronic device.

28. The chip system according to claim 27, wherein the performing data exchange with a second electronic device based on the C-V2X protocol in response to a data exchange instruction sent by the electronic device comprises:
receiving roadside information sent by the second electronic device;
determining, based on the roadside information, that the second electronic device has permission to access the electronic device;
generating an authentication packet used to indicate the access permission and a transaction authentication code used to indicate transaction information, and sending the authentication packet and the transaction authentication code to the second electronic device;
receiving a man-machine interaction interface request sent by the second electronic device based on the authentication packet and the transaction authentication code;
responding to the man-machine interaction interface request, and sending a response result of the man-machine interaction interface request to the second electronic device; and
receiving event report information sent by the second electronic device based on the response result of the man-machine interaction interface request, wherein the event report information is used to indicate that the electronic device completes data exchange with the second electronic device.
